# EUROPEAN PATENT APPLICATION

(11) **EP 4 718 377 A1**
(43) Date of publication of application: **01.04.2026**
(21) Application number: 25197743.5
(22) Date of filing: 22.08.2025
(51) Int. Cl.: G06T 7/00, G06T 7/33, G06T 7/73, G06T 3/02

(54) **METHODS AND APPARATUS FOR SEMICONDCUTOR DIE FAULT ANALYSIS USING MULTIPLE IMAGING TOOLS**

(30) Priority: 27.09.2024 US 202418899529
(71) Applicant: INTEL Corporation, Santa Clara, CA 95054 (US)
(72) Inventor: WANG, Binbin, Portland, OR 97229 (US); SHIM, Hyun Woo, Beaverton, OR 97007 (US); MITCHELL, Garrett Martin, Pomona, CA 91766 (US)
(74) Representative: HGF

(57) **Abstract**

Methods and apparatus for semiconductor die fault analysis are disclosed. An example apparatus comprises interface circuitry, machine-readable instructions, and at least one processor circuit to be programmed by the machine-readable instructions to identify a location of a reference feature on a semiconductor die within a first image of the semiconductor die, the first image containing a region of interest on the semiconductor die adjacent to the reference feature, transform a baseline pattern of the semiconductor die to align a location of a baseline feature in the baseline pattern with the location of the reference feature in the first image, and determine a location of the region of interest in the first image based on the transformed baseline pattern.

## Description

### BACKGROUND

Fault analysis tools are used to inspect a region of interest (ROI) on a semiconductor die. Some fault analysis tools are imaging tools that scan and/or capture an image of an ROI and, in turn, display the image to an operator for subsequent analysis or examination.

### BRIEF DESCRIPTION OF THE DRAWINGS

FIG. 1 is a top view of a wafer including dies to be inspected in accordance with teachings disclosed herein.
FIG. 2 is a cross-sectional side view of an IC device that may be included in an example die to be inspected in accordance with teachings disclosed herein.
FIG. 3 is a block diagram of an example environment in which example die assessment circuitry operates to determine a location of a region of interest (ROI) in an image of a semiconductor die.
FIG. 4A illustrates an example input image captured by an example first tool in the environment of FIG. 3.
FIG. 4B illustrates an example CAD layout of the semiconductor die of FIG. 3.
FIG. 4C illustrates the example input image of FIG. 4A with an example first graphical indication of the ROI.
FIG. 4D illustrates an example baseline pattern corresponding to the semiconductor die of FIG. 3.
FIG. 4E illustrates an example subsequent image captured by an example second tool in the environment of FIG. 3.
FIG. 4F illustrates the example subsequent image of FIG. 4E with an example second graphical indication of the ROI.
FIG. 5 is a flowchart representative of example machine readable instructions and/or example operations that may be executed, instantiated, and/or performed by example programmable circuitry to implement the die assessment circuitry of FIG. 3.
FIG. 6 is a block diagram of an example processing platform including programmable circuitry structured to execute, instantiate, and/or perform the example machine readable instructions and/or perform the example operations of FIG. 5 to implement the die assessment circuitry 302 of FIG. 3.
FIG. 7 is a block diagram of an example implementation of the programmable circuitry of FIG. 6.
FIG. 8 is a block diagram of another example implementation of the programmable circuitry of FIG. 6.
FIG. 9 is a block diagram of an example software/firmware/instructions distribution platform (e.g., one or more servers) to distribute software, instructions, and/or firmware (e.g., corresponding to the example machine readable instructions of FIG. 5) to client devices associated with end users and/or consumers (e.g., for license, sale, and/or use), retailers (e.g., for sale, re-sale, license, and/or sub-license), and/or original equipment manufacturers (OEMs) (e.g., for inclusion in products to be distributed to, for example, retailers and/or to other end users such as direct buy customers).

In general, the same reference numbers will be used throughout the drawing(s) and accompanying written description to refer to the same or like parts. The figures are not necessarily to scale. Instead, the thickness of the layers or regions may be enlarged in the drawings. Although the figures show layers and regions with clean lines and boundaries, some or all of these lines and/or boundaries may be idealized. In reality, the boundaries and/or lines may be unobservable, blended, and/or irregular.

### DETAILED DESCRIPTION

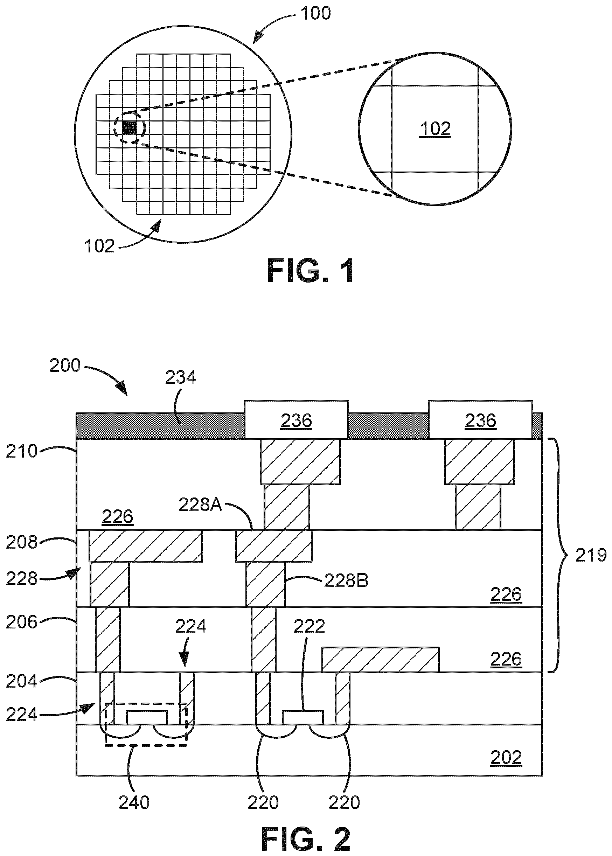

FIG. 1 is a top view of a wafer 100 and dies 102 that can be inspected for faults in accordance with teachings disclosed herein. The wafer 100 includes semiconductor material and one or more dies 102 having circuitry. Each of the dies 102 may be a repeating unit of a semiconductor product. After the fabrication of the semiconductor product is complete, the wafer 100 may undergo a singulation process in which the dies 102 are separated from one another to provide discrete "chips." The die 102 includes one or more transistors (e.g., some of the transistors 240 of FIG. 2, discussed below), supporting circuitry to route electrical signals to the transistors, passive components (e.g., traces, resistors, capacitors, inductors, and/or other circuitry), and/or any other components. In some examples, the die 102 may include and/or implement a memory device (e.g., a random access memory (RAM) device, such as a static RAM (SRAM) device, a magnetic RAM (MRAM) device, a resistive RAM (RRAM) device, a conductive-bridging RAM (CBRAM) device, etc.), a logic device (e.g., an AND, OR, NAND, or NOR gate), or any other suitable circuitry or electronics. Multiple ones of these devices may be combined on a single die 102. For example, a memory array of multiple memory circuits may be formed on a same die 102 as programmable circuitry and/or other logic circuitry. Such memory may store information for use by the programmable circuitry. Example semiconductor dies (e.g., example semiconductor die 306) disclosed herein may be manufactured using a die-to-wafer assembly technique in which some dies are attached to a wafer 100 that includes others of the dies, and the wafer 100 is subsequently singulated.

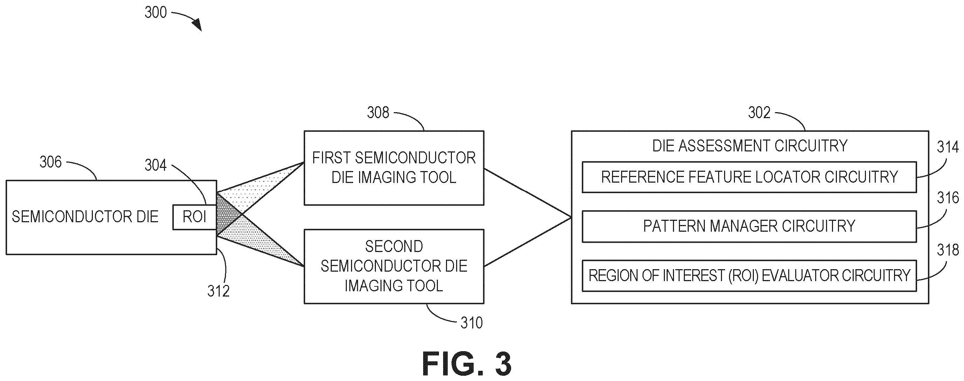

FIG. 2 is a cross-sectional side view of an IC device 200 that may be included in an IC package whose substrate includes one or more of the semiconductor die 306 (as discussed further below in connection with FIG. 3) to be inspected in accordance with teachings disclosed herein. One or more of the IC devices 200 may be included in one or more dies 102 (FIG. 1). The IC device 200 may be formed on a die substrate 202 (e.g., the wafer 100 of FIG. 1) and may be included in a die (e.g., the die 102 of FIG. 1). The die substrate 202 may be a semiconductor substrate including semiconductor materials including, for example, n-type or p-type materials systems (or a combination of both). The die substrate 202 may include, for example, a crystalline substrate formed using a bulk silicon or a silicon-on-insulator (SOI) substructure. In some examples, the die substrate 202 may be formed using alternative materials, which may or may not be combined with silicon, that include but are not limited to germanium, indium antimonide, lead telluride, indium arsenide, indium phosphide, gallium arsenide, or gallium antimonide. Further materials classified as group II-VI, III-V, or IV may also be used to form the die substrate 202. Although a few examples of materials from which the die substrate 202 may be formed are described here, any material that may serve as a foundation for an IC device 200 may be used. The die substrate 202 may be part of a singulated die (e.g., the dies 102 of FIG. 1) or a wafer (e.g., the wafer 100 of FIG. 1).

The IC device 200 may include one or more device layers 204 disposed on and/or above the die substrate 202. The device layer 204 may include features of one or more transistors 240 (e.g., metal oxide semiconductor field-effect transistors (MOSFETs)) formed on the die substrate 202. The device layer 204 may include, for example, one or more source and/or drain (S/D) regions 220, a gate 222 to control current flow between the S/D regions 220, and one or more S/D contacts 224 to route electrical signals to/from the S/D regions 220. The transistors 240 may include additional features not depicted for the sake of clarity, such as device isolation regions, gate contacts, and the like. The transistors 240 are not limited to the type and configuration depicted in FIG. 2 and may include a wide variety of other types and/or configurations such as, for example, planar transistors, non-planar transistors, or a combination of both. Non-planar transistors may include FinFET transistors, such as double-gate transistors or tri-gate transistors, and wrap-around or all-around gate transistors, such as nanoribbon and nanowire transistors.

Each transistor 240 may include a gate 222 including a gate dielectric and a gate electrode. The gate dielectric may include one layer or a stack of layers. The one or more layers may include silicon oxide, silicon dioxide, silicon carbide, and/or a high-k dielectric material. The high-k dielectric material may include elements such as hafnium, silicon, oxygen, titanium, tantalum, lanthanum, aluminum, zirconium, barium, strontium, yttrium, lead, scandium, niobium, and/or zinc. Examples of high-k materials that may be used in the gate dielectric include, but are not limited to, hafnium oxide, hafnium silicon oxide, lanthanum oxide, lanthanum aluminum oxide, zirconium oxide, zirconium silicon oxide, tantalum oxide, titanium oxide, barium strontium titanium oxide, barium titanium oxide, strontium titanium oxide, yttrium oxide, aluminum oxide, lead scandium tantalum oxide, and/or lead zinc niobate. In some examples, an annealing process may be carried out on the gate dielectric to improve its quality when a high-k material is used.

The gate electrode may be formed on the gate dielectric and may include at least one p-type work function metal or n-type work function metal, depending on whether the transistor 240 is to be a p-type metal oxide semiconductor (PMOS) or an n-type metal oxide semiconductor (NMOS) transistor. In some implementations, the gate electrode may include a stack of two or more metal layers, where one or more metal layers are work function metal layers and at least one metal layer is a fill metal layer. Further metal layers may be included, such as a barrier layer. For a PMOS transistor, metals that may be used for the gate electrode include, but are not limited to, ruthenium, palladium, platinum, cobalt, nickel, conductive metal oxides (e.g., ruthenium oxide), and/or any of the metals discussed below with reference to an NMOS transistor (e.g., for work function tuning). For an NMOS transistor, metals that may be used for the gate electrode include, but are not limited to, hafnium, zirconium, titanium, tantalum, aluminum, alloys of these metals, carbides of these metals (e.g., hafnium carbide, zirconium carbide, titanium carbide, tantalum carbide, and/or aluminum carbide), and/or any of the metals discussed above with reference to a PMOS transistor (e.g., for work function tuning).

In some examples, when viewed as a cross-section of the transistor 240 along the source-channel-drain direction, the gate electrode may include a U-shaped structure that includes a bottom portion substantially parallel to the surface of the die substrate 202 and two sidewall portions that are substantially perpendicular to the top surface of the die substrate 202. In other examples, at least one of the metal layers that form the gate electrode may be a planar layer that is substantially parallel to the top surface of the die substrate 202 and does not include sidewall portions substantially perpendicular to the top surface of the die substrate 202. In other examples, the gate electrode may include a combination of U-shaped structures and/or planar, non-U-shaped structures. For example, the gate electrode may include one or more U-shaped metal layers formed atop one or more planar, non-U-shaped layers.

In some examples, a pair of sidewall spacers may be formed on opposing sides of the gate stack to bracket the gate stack. The sidewall spacers may be formed from materials such as silicon nitride, silicon oxide, silicon carbide, silicon nitride doped with carbon, and/or silicon oxynitride. Processes for forming sidewall spacers are well known in the art and generally include deposition and etching process operations. In some examples, a plurality of spacer pairs may be used; for instance, two pairs, three pairs, or four pairs of sidewall spacers may be formed on opposing sides of the gate stack.

The S/D regions 220 may be formed within the die substrate 202 adjacent to the gate 222 of corresponding transistor(s) 240. The S/D regions 220 may be formed using an implantation/diffusion process or an etching/deposition process, for example. In the former process, dopants such as boron, aluminum, antimony, phosphorous, or arsenic may be ion-implanted into the die substrate 202 to form the S/D regions 220. An annealing process that activates the dopants and causes them to diffuse farther into the die substrate 202 may follow the ion-implantation process. In the latter process, the die substrate 202 may first be etched to form recesses at the locations of the S/D regions 220. An epitaxial deposition process may then be carried out to fill the recesses with material that is used to fabricate the S/D regions 220. In some implementations, the S/D regions 220 may be fabricated using a silicon alloy such as silicon germanium or silicon carbide. In some examples, the epitaxially deposited silicon alloy may be doped in situ with dopants such as boron, arsenic, or phosphorous. In some examples, the S/D regions 220 may be formed using one or more alternate semiconductor materials such as germanium or a group III-V material or alloy. In further examples, one or more layers of metal and/or metal alloys may be used to form the S/D regions 220.

Electrical signals, such as power and/or input/output (I/O) signals, may be routed to and/or from the devices (e.g., transistors 240) of the device layer 204 through one or more interconnect layers disposed on the device layer 204 (illustrated in FIG. 2 as interconnect layers 206-210). For example, electrically conductive features of the device layer 204 (e.g., the gate 222 and the S/D contacts 224) may be electrically coupled with the interconnect structures 228 of the interconnect layers 206-210. The one or more interconnect layers 206-210 may form a metallization stack (also referred to as an "ILD stack") 2019 of the IC device 200.

The interconnect structures 228 may be arranged within the interconnect layers 206-210 to route electrical signals according to a wide variety of designs (in particular, the arrangement is not limited to the particular configuration of interconnect structures 228 depicted in FIG. 2). Although a particular number of interconnect layers 206-210 is depicted in FIG. 2, examples of the present disclosure include IC devices having more or fewer interconnect layers than depicted.

In some examples, the interconnect structures 228 may include lines 228a and/or vias 228b filled with an electrically conductive material such as a metal. The lines 228a may be arranged to route electrical signals in a direction of a plane that is substantially parallel with a surface of the die substrate 202 upon which the device layer 204 is formed. For example, the lines 228a may route electrical signals in a direction in and/or out of the page from the perspective of FIG. 2. The vias 228b may be arranged to route electrical signals in a direction of a plane that is substantially perpendicular to the surface of the die substrate 202 upon which the device layer 204 is formed. In some examples, the vias 228b may electrically couple lines 228a of different interconnect layers 206-210 together.

The interconnect layers 206-210 may include a dielectric material 226 disposed between the interconnect structures 228, as shown in FIG. 2. In some examples, the dielectric material 226 disposed between the interconnect structures 228 in different ones of the interconnect layers 206-210 may have different compositions; in other examples, the composition of the dielectric material 226 between different interconnect layers 206-210 may be the same.

A first interconnect layer 206 (referred to as Metal 1 or "M1") may be formed directly on the device layer 204. In some examples, the first interconnect layer 206 may include lines 228a and/or vias 228b, as shown. The lines 228a of the first interconnect layer 206 may be coupled with contacts (e.g., the S/D contacts 224) of the device layer 204.

A second interconnect layer 208 (referred to as Metal 2 or "M2") may be formed directly on the first interconnect layer 206. In some examples, the second interconnect layer 208 may include vias 228b to couple the lines 228a of the second interconnect layer 208 with the lines 228a of the first interconnect layer 206. Although the lines 228a and the vias 228b are structurally delineated with a line within each interconnect layer (e.g., within the second interconnect layer 208) for the sake of clarity, the lines 228a and the vias 228b may be structurally and/or materially contiguous (e.g., simultaneously filled during a dual-damascene process) in some examples.

A third interconnect layer 210 (referred to as Metal3 or "M3") (and additional interconnect layers, as desired) may be formed in succession on the second interconnect layer 208 according to similar techniques and/or configurations described in connection with the second interconnect layer 208 or the first interconnect layer 206. In some examples, the interconnect layers that are "higher up" in the metallization stack 219 in the IC device 200 (i.e., further away from the device layer 204) may be thicker.

The IC device 200 may include a solder resist material 234 (e.g., polyimide or similar material) and one or more conductive contacts 236 formed on the interconnect layers 206-210. In FIG. 2, the conductive contacts 236 are illustrated as taking the form of bond pads. The conductive contacts 236 may be electrically coupled with the interconnect structures 228 and configured to route the electrical signals of the transistor(s) 240 to other external devices. For example, solder bonds may be formed on the one or more conductive contacts 236 to mechanically and/or electrically couple a chip including the IC device 200 with another component (e.g., a circuit board). The IC device 200 may include additional or alternate structures to route the electrical signals from the interconnect layers 206-210; for example, the conductive contacts 236 may include other analogous features (e.g., posts) that route the electrical signals to external components.

In some examples, the die substrate 202 and/or the dies 102 of FIG. 1 include at least one region of interest (ROI) to be examined and/or inspected in a fault analysis process. For example, a ROI on a semiconductor die may be a stress concentration area that is susceptible to cracking or failure. In other examples, the ROI on a semiconductor die may be associated with one or more particular features known to give rise to electrical failures (e.g., short circuits or incomplete circuits). Example beam-based imaging tools such as a scanning electron microscope (SEM), transmission electron microscopy (TEM), ion beam, optical microscopes, etc., are used to evaluate ROIs. In some examples, it is helpful to have multiple images of a ROI using different types of imaging techniques. For example, an image of an ROI using TEM can yield more or different information about the ROI compared to another image of an ROI using SEM. However, some ROIs may be camouflaged within an image of a surface of the semiconductor die generated using a given imaging technique and/or are otherwise difficult to locate. As such, valuable time is lost in determining the location of ROIs as different image techniques scan and capture the semiconductor die. This time loss is further aggravated by the variability across the different imaging tools. Each imaging technique uniquely captures an example surface based on contrast differences, distortion, signal noise, beam-surface interactions, etc. Thus, an image of a surface of a die captured via SEM is different from an image of the same surface of the die captured via TEM. As such, the different imaging tools yield different imaging results that are difficult to compare to determine similar or different features, to locate ROIs, etc.

To locate a ROI on an image captured by one of the aforementioned imaging tools, a human operator consults or accesses a database that stores a blueprint design (e.g., a computer aided design (CAD) model) of the corresponding die surface. The blueprint design aids the operator in locating the ROI on the captured image. However, this task is often time consuming and prone to human error. Typically, die surfaces include fiducial markers to mark, indicate, point to, etc., ROIs. For example, fiducial markers are positioned on an example die surface in a pattern around and/or adjacent to a ROI. As fiducial markers are visually apparent in an image of the example die surface, a location of a corresponding ROI can be deduced based on the pattern of the fiducial markers. However, the pattern of the fiducial markers are stored in a like or same database as the blueprint design. So, operators still need to consult or access the database to understand the pattern of the fiducial markers, compare the pattern to each new image captured by the different imaging tools, deduce the location of the ROI, etc. As previously mentioned, this manual intervention is time expensive and prone to error. Further, operators may need to be highly skilled or intensively trained to interpret the blueprint designs, which adds to the time spent locating ROIs.

Examples disclosed herein determine an example pattern of fiducial markers for locating an ROI across images generated by various imaging tools. For example, disclosed examples determine an example pattern of fiducial markers based on a first image of a die surface generated by a first imaging tool to, in turn, compare the pattern to a second image of the die surface generated by a second imaging tool. Further, disclosed examples locate the ROI in the second image based on the pattern. In some examples, disclosed examples locate the ROI in a third image of the die surface (e.g., generated by a third imaging tool different from the first and second imaging tools) by utilizing the example pattern. As such, disclosed examples quickly locate ROIs in multiple images of a die surface without manually referring to a database of design blueprints. Further, examples disclosed herein protect design files from unwanted exposure by reducing the number of times an operator accesses the database of design blueprints. Disclosed examples enable accurate and efficient location of ROIs across different images. As such, examples disclosed herein are compatible with different types of imaging tools. Further, disclosed examples enable responsive and accurate remedial actions to address and mitigate failures associated with the ROIs.

FIG. 3 is a block diagram of an example environment 300 in which example die assessment circuitry 302 operates to determine a location of an example ROI 304 in an image of an example semiconductor die 306. The example environment 300 includes the semiconductor die 306, an example first semiconductor die imaging tool 308, an example second semiconductor die imaging tool 310, and the example die assessment circuitry 302. The example first semiconductor die imaging tool 308 and the second semiconductor die imaging tool 310 are also referred to herein as the "first tool 308" and the "second tool 310," respectively. In the example of FIG. 3, the first tool 308 is a first type of imaging device and the second tool 310 is a second type of imaging device, the second type of imaging device different than the first type of imaging device. In some examples, the first and second types of imaging devices correspond to different ones of at least one of an SEM, a TEM, focused ion beam (FIB) device, a nanoprober, or an optical microscope. In some examples, the environment 300 includes more than two different types of imaging devices.

The example semiconductor die 306 includes the ROI 304 positioned on an example surface 312 of the semiconductor die 306. The example first tool 308 captures a first image of the surface 312. Similarly, the example second tool 310 captures a second image of the surface 312. In the example of FIG. 3, the die assessment circuitry 302 accesses the first image as an input image to determine an example pattern associated with the surface 312. As such, the example first image associated with the first tool 308 may be referred to herein as the input image. The example input image includes the surface 312, the ROI 304, any reference features (e.g., fiducial markers) associated with or adjacent to the ROI 304, etc. Further, the example die assessment circuitry 302 accesses the second image as a subsequent image to determine a location of the ROI 304 in the second image. As such, the second image associated with the second tool 310 may be referred to herein as the subsequent image. The example subsequent image includes the surface 312, the ROI 304, any reference features associated with or adjacent to the ROI 304, etc. In the example of FIG. 3, the ROI 304 is camouflaged in the subsequent image (e.g., due to image distortion associated with the second tool 310). As such, the die assessment circuitry 302 operates to determine a location of the ROI 304 in the subsequent image (e.g., for subsequent examination).

The example die assessment circuitry 302 includes example reference feature locator circuitry 314, example pattern manager circuitry 316, and example ROI evaluator circuitry 318. The die assessment circuitry 302 of FIG. 3 may be instantiated (e.g., creating an instance of, bring into being for any length of time, materialize, implement, etc.) by programmable circuitry such as a Central Processor Unit (CPU) executing first instructions. Additionally or alternatively, the die assessment circuitry 302 of FIG. 3 may be instantiated (e.g., creating an instance of, bring into being for any length of time, materialize, implement, etc.) by (i) an Application Specific Integrated Circuit (ASIC) and/or (ii) a Field Programmable Gate Array (FPGA) structured and/or configured in response to execution of second instructions to perform operations corresponding to the first instructions. It should be understood that some or all of the circuitry of FIG. 3 may, thus, be instantiated at the same or different times. Some or all of the circuitry of FIG. 3 may be instantiated, for example, in one or more threads executing concurrently on hardware and/or in series on hardware. Moreover, in some examples, some or all of the circuitry of FIG. 3 may be implemented by microprocessor circuitry executing instructions and/or FPGA circuitry performing operations to implement one or more virtual machines and/or containers.

The example reference feature locator circuitry 314 accesses the input and subsequent images from the first and second tools 308, 310, respectively. The example reference feature locator circuitry 314 identifies a location of the reference feature within the input image of the semiconductor die 306. In some examples, the reference feature is one of a set of different reference features captured in both the test and input images. The example reference feature locator circuitry 314 identifies a location of a reference feature on the semiconductor die 306 within the subsequent image of the semiconductor die 306. In some examples, the reference feature locator circuitry 314 determines the location of the reference feature in the input image by accessing a computer aided design (CAD) layout of the semiconductor die 306 (e.g., in a reference database). The example CAD layout includes the reference feature and the location associated with the reference feature. In some examples, the CAD layout of the semiconductor die 306 does not include the reference feature or the location associated with the reference feature because such features are added independent of the CAD layout after fabrication of the semiconductor die 306 (e.g., in preparation for fault analysis imaging). Further, the example reference feature locator circuitry 314 presents the CAD layout to a user to facilitate identification of the ROI 304 in the input image of the semiconductor die 306. For example, the reference feature locator circuitry 314 can access feedback (e.g., tactile feedback via a mouse, tactile feedback via keyboard, audio feedback via microphone, etc.) from a user.

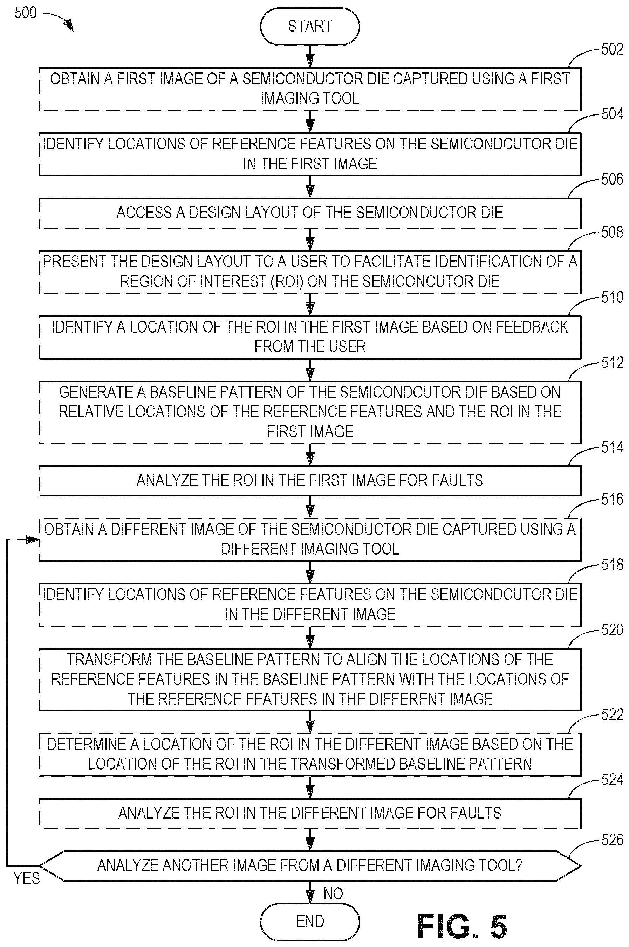

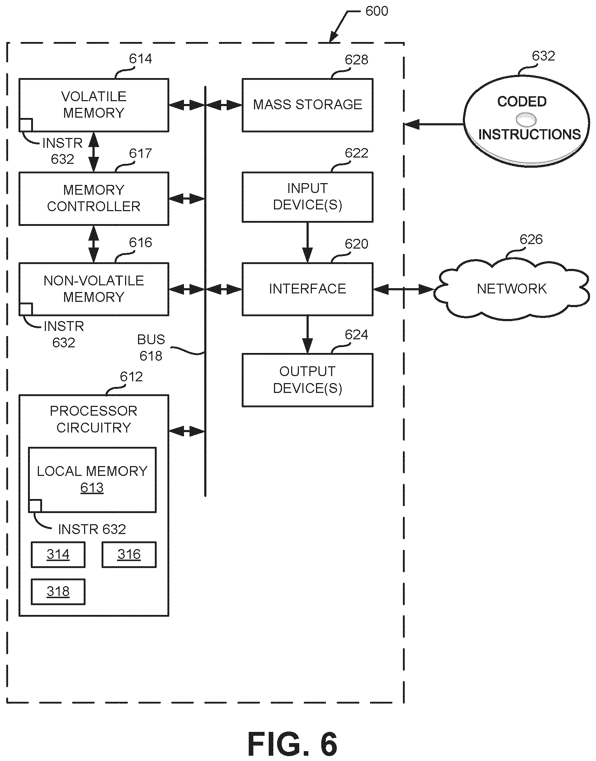

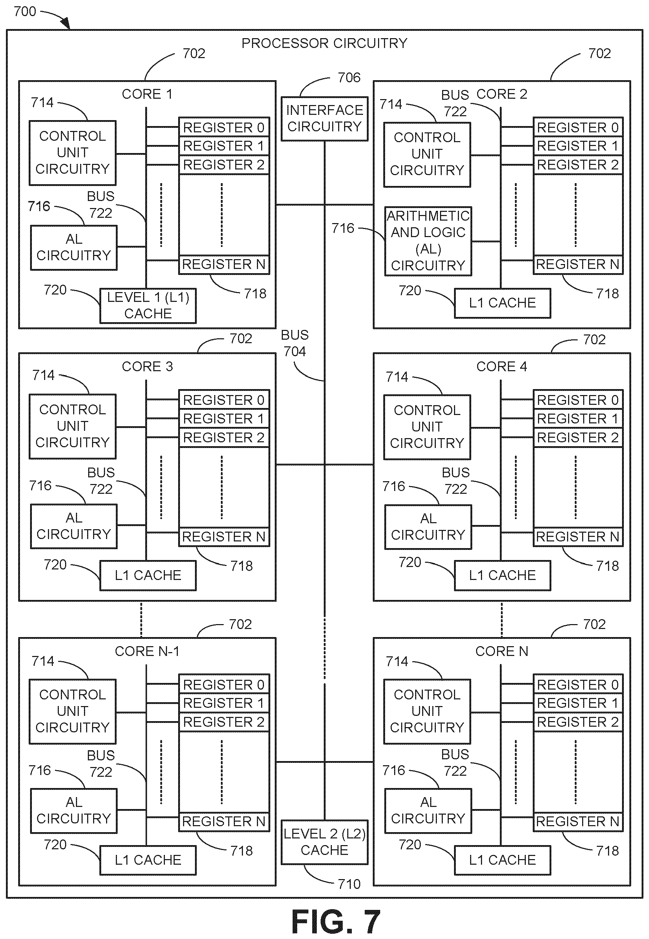

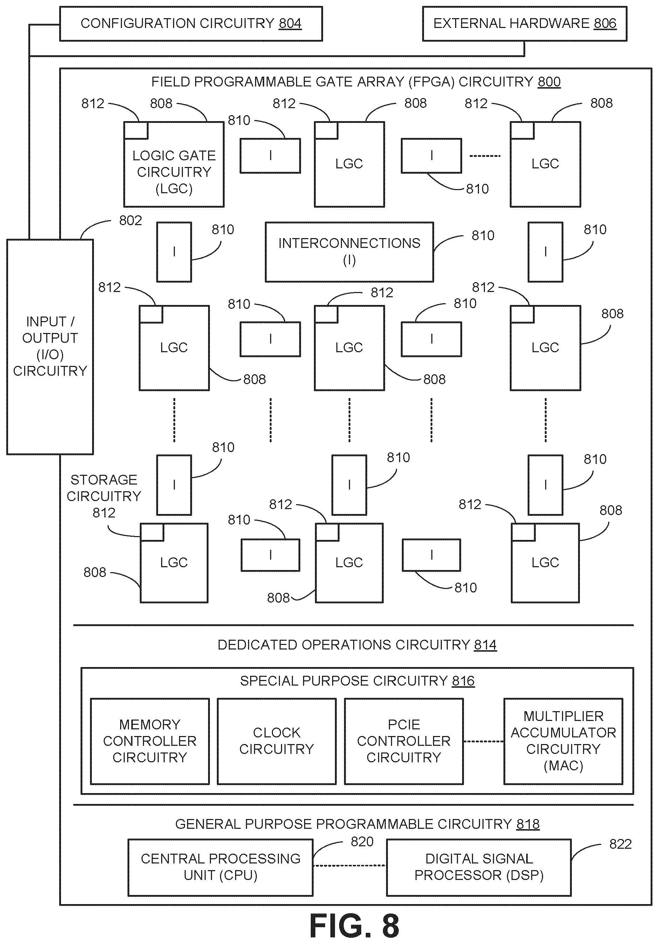

In some examples, the reference feature locator circuitry 314 is instantiated by programmable circuitry executing reference feature locating instructions and/or configured to perform operations such as those represented by the flowchart of FIG. 5. In some examples, the die assessment circuitry 302 includes means for locating a reference feature. For example, the means for locating may be implemented by the reference feature locator circuitry 314. In some examples, the reference feature locator circuitry 314 may be instantiated by programmable circuitry such as the example programmable circuitry 612 of FIG. 6. For instance, the example reference feature locator circuitry 314 may be instantiated by the example microprocessor 700 of FIG. 7 executing machine executable instructions such as those implemented by at least blocks 502, 504, 506, 508, 516, 518 of FIG. 5. In some examples, the reference feature locator circuitry 314 may be instantiated by hardware logic circuitry, which may be implemented by an ASIC, XPU, or the FPGA circuitry 800 of FIG. 8 configured and/or structured to perform operations corresponding to the machine readable instructions. Additionally or alternatively, the example reference feature locator circuitry 314 may be instantiated by any other combination of hardware, software, and/or firmware. For example, the reference feature locator circuitry 314 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

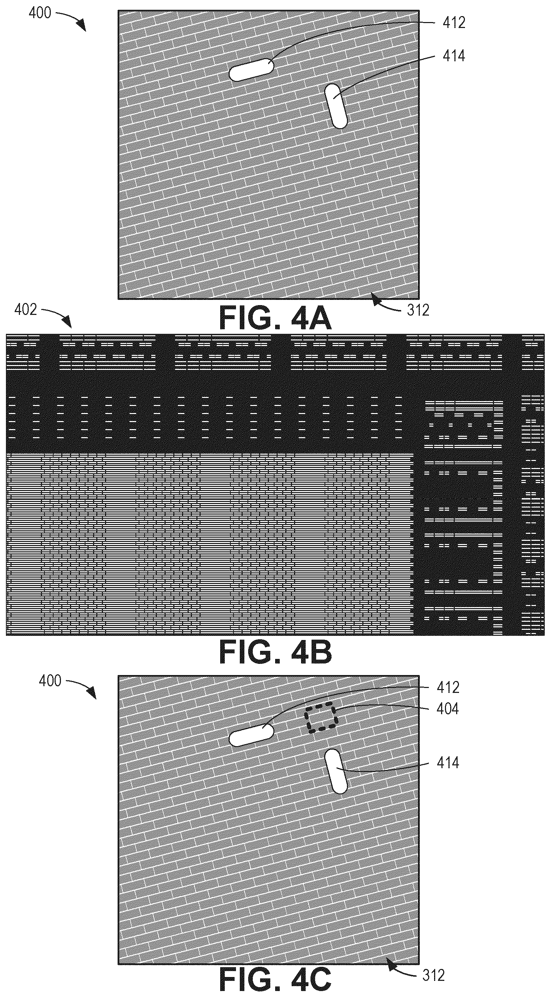

In some examples, the pattern manager circuitry 316 generates a baseline pattern of the semiconductor die 306 based on the location of the reference feature in the input image and based on the location of the ROI 304 in the input image. The example pattern manager circuitry 316 transforms a baseline pattern of the semiconductor die 306 to align a location of one or more baseline feature(s) in the baseline pattern with the location of one or more corresponding reference feature(s) in the subsequent image. In some examples, the pattern manager circuitry 316 transforms the baseline pattern using an affine transformation. The example pattern manager circuitry 316 defines the location of the baseline feature with/as the location of the reference feature within the input image (e.g., the location of the reference feature as determined by the reference feature locator circuitry 314). In some examples, the pattern manager circuitry 316 generates the baseline pattern based on locations of each of the different reference features. In some examples, the baseline pattern defines a first spatial relationship (e.g., a known distance, a known orientation, a known spacing, etc.) between the different references features. Further, the example baseline pattern defines a second spatial relationship between the ROI 304 and the set of the different reference features. The example first and second spatial relationships are described in detail in connection with FIGS. 4A-4G.

In some examples, the pattern manager circuitry 316 is instantiated by programmable circuitry executing pattern managing instructions and/or configured to perform operations such as those represented by the flowchart of FIG. 5. In some examples, the die assessment circuitry 302 includes means for controlling a pattern. For example, the means for controlling may be implemented by the pattern manager circuitry 316. In some examples, the pattern manager circuitry 316 may be instantiated by programmable circuitry such as the example programmable circuitry 612 of FIG. 6. For instance, the example pattern manager circuitry 316 may be instantiated by the example microprocessor 700 of FIG. 7 executing machine executable instructions such as those implemented by at least blocks 512, 520 of FIG. 5. In some examples, the pattern manager circuitry 316 may be instantiated by hardware logic circuitry, which may be implemented by an ASIC, XPU, or the FPGA circuitry 800 of FIG. 8 configured and/or structured to perform operations corresponding to the machine readable instructions. Additionally or alternatively, the example pattern manager circuitry 316 may be instantiated by any other combination of hardware, software, and/or firmware. For example, the pattern manager circuitry 316 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

In some examples, the ROI evaluator circuitry 318 determines a location of the ROI 304 in the input image based on the location of the reference feature in the input image. Further, the ROI evaluator circuitry 318 determines the location of the ROI 304 in the input image based on the user feedback. As such, the example ROI evaluator circuitry 318 determines the location of the ROI 304 in the input image with input from a user referencing the CAD layout of the semiconductor die 306. In turn, the example ROI evaluator circuitry 318 analyzes (e.g., assesses, scans, etc.) the ROI 304 in the input image for faults. The example ROI evaluator circuitry 318 determines a location of the ROI 304 in the subsequent image based on the transformed baseline pattern. In some examples, the ROI evaluator circuitry 318 automatically determines the location of the ROI 304 in the subsequent image without input from a user referencing a computer aided design (CAD) layout of the semiconductor die 306. In turn, the example ROI evaluator circuitry 318 analyzes the ROI 304 in the subsequent image for faults.

In some examples, the ROI evaluator circuitry 318 is instantiated by programmable circuitry executing evaluating instructions and/or configured to perform operations such as those represented by the flowchart of FIG. 5. In some examples, the die assessment circuitry 302 includes means for evaluating a ROI. For example, the means for evaluating may be implemented by the ROI evaluator circuitry 318. In some examples, the ROI evaluator circuitry 318 may be instantiated by programmable circuitry such as the example programmable circuitry 612 of FIG. 6. For instance, the example ROI evaluator circuitry 318 may be instantiated by the example microprocessor 700 of FIG. 7 executing machine executable instructions such as those implemented by at least blocks 510, 522, 524 of FIG. 5. In some examples, the ROI evaluator circuitry 318 may be instantiated by hardware logic circuitry, which may be implemented by an ASIC, XPU, or the FPGA circuitry 800 of FIG. 8 configured and/or structured to perform operations corresponding to the machine readable instructions. Additionally or alternatively, the example ROI evaluator circuitry 318 may be instantiated by any other combination of hardware, software, and/or firmware. For example, the ROI evaluator circuitry 318 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

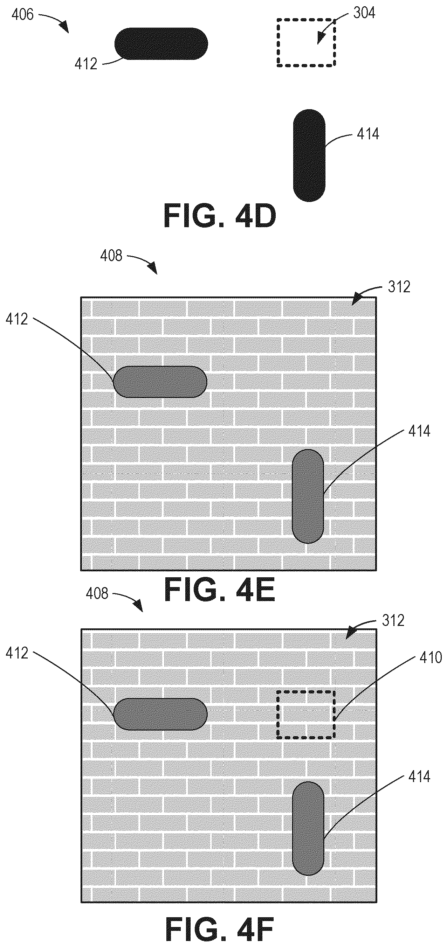

FIG. 4A illustrates an example input image 400 captured by the first tool 308 of FIG. 3. FIG. 4B illustrates an example CAD layout 402 of the semiconductor die 306. FIG. 4C illustrates the example input image 400 of FIG. 4A with an example first graphical indication 404 of the ROI 304. FIG. 4D illustrates an example baseline pattern 406 corresponding to the semiconductor die 306 and the ROI 304. FIG. 4E illustrates an example subsequent image 408 captured by the second tool 310 of FIG. 3. FIG. 4F illustrates the example subsequent image 408 of FIG. 4E with an example second graphical indication 410 of the ROI 304.

Turning to FIG. 4A, the example reference feature locator circuitry 314 obtains the input image 400 of the semiconductor die 306 captured using the first tool 308. The example input image 400 includes the surface 312 and example first and second reference features 412, 414 positioned on the surface 312. The example reference feature locator circuitry 314 identifies a first location of the first reference feature 412 and a second location of the second reference feature 414. The example reference feature locator circuitry 314 accesses the CAD layout 402 (FIG. 4B) of the semiconductor die 306 (e.g., from a reference database) to determine a location of the ROI 304 on the surface 312 in the input image 400. For example, the reference feature locator circuitry 314 presents and/or otherwise displays the CAD layout 402 to a user to facilitate identification of the ROI 304 on the semiconductor die 306. Further, the example reference feature locator circuitry 314 can access feedback (e.g., feedback that indicates ROI 304 identification) from a user. In some examples, the CAD layout 402 is a dynamic display that enables a user to mask, uncover, etc., different layers or perspectives of the surface 312 to reveal information about the ROI 304. In turn, the example ROI evaluator circuitry 318 determines and/or identifies the location of the ROI 304 in the input image 400 based on the user feedback. In FIG. 4C, the location of the example ROI 304 is indicated by the first graphical indication 404 (e.g., a dashed box). In some examples, an operator/user recognizes the first and second reference features 412, 414 as helpful aids and/or guideposts in determining a general area of the CAD layout 403 to examine for identifying a more precise location of the ROI 304.

The example pattern manager circuitry 316 generates the baseline pattern 406 (FIG. 4D) of the semiconductor die 306 based on the relative locations of the first and second reference features 412, 414 and the ROI 304 in the input image 400. In some examples, the baseline pattern 406 defines a first spatial relationship between the first and second reference features 412, 414. Further, the example baseline pattern 406 defines a second spatial relationship between the ROI 304 and the first and second reference features 412, 414. In some examples, the first spatial relationship includes a size, distance, angle, offset, and/or any other geometrical relationship between the first and second reference features 412, 414. Similarly, the second spatial relationship can include a size, distance, angle, offset, and/or any other geometrical relationship between the first reference feature 412, the second reference feature 414, and/or the ROI 304. In some examples, the first spatial relationship and/or the second spatial relationship are defined based on stored coordinates associated with the locations of the first reference feature 412, the second reference feature 414, and the ROI 304 in the input image 400.

Turning to FIG. 4E, the example reference feature locator circuitry 314 obtains the subsequent image 408 of the semiconductor die 306 captured using the second tool 310. The example subsequent image 408 includes the surface 312 and the first and second reference features 412, 414 positioned on the surface 312. The example subsequent image 408 of the surface 312 is different from the input image 400 of the surface 312 based on the first tool 308 being different from the second tool 310. For example, the second tool 310 may have different contrast, brightness, exposure, field-of-view, zoom, distortion, etc., settings than the first tool 308. Thus, the example first and second reference features 412, 414 are positioned differently and/or appear/look different (e.g., darker) in the subsequent image 408 compared to the appearance of the first and second reference features 412, 414 in the input image 400. Similarly, the example surface 312 is positioned differently and/or appears/looks different (e.g., lighter) in the subsequent image 408 compared to the appearance of the surface 312 in the input image 400. Further, the first tool 308 may be operated by a first operator and the second tool 310 may be operated by a second operator having a different experience level and/or different preferences than the first operator, which can vary the perspectives of the input image 400 and the subsequent image 408. In some examples, the input image 400 is captured during TEM lamella preparation using a FIB-SEM tool and the subsequent image 408 is captured by a TEM tool for subsequent inspection (e.g., once the TEM lamella preparation task is completed). In some examples, the FIB-SEM tool creates the first and second reference features 412, 414 on the surface 312. In some examples, the first and second reference features 412, 414 are trenches in the surface 312 with metal deposited therein.

The example reference feature locator circuitry 314 identifies locations of the first and second reference features 412, 414 in the subsequent image 408. In some examples, this is achieved based on user feedback (e.g., user selected and/or otherwise specified coordinates) identifying the location of the first and second reference features 412, 414 through a visual inspection of the subsequent image 408 by the user. Manual (e.g., human-based) identification of the location of the first and second reference features 412, 414 can be relatively straightforward because of the easily identifiable nature of the first and second reference features 412, 414 within the subsequent image 408. The example pattern manager circuitry 316 transforms (e.g., enlarges, shrinks, rotates, translates, geometrically distorts (e.g., warps), etc.) the baseline pattern 406 to align the locations of the first and second reference features 412, 414 in the baseline pattern 406 with the location of the first and second reference features 412, 414 in the subsequent image 408. More particularly, in some examples, the pattern manager circuitry 316 transforms the baseline pattern 406 so that the coordinates defining the spatial relationship between the reference features 412, 414 in the baseline pattern 406 match or align with the coordinates of the reference features 412, 414 in the subsequent image 408 as determined by the example reference feature locator circuitry 314 (e.g., based on user feedback). In this example, the pattern manager circuitry 316 transforms the baseline pattern 406 by rotating the baseline pattern 406 (e.g., by about 30 degrees counterclockwise) and reducing a size of the baseline pattern 406 relative to the subsequent image 408 (e.g., to facilitate alignment). In turn, the example ROI evaluator circuitry 318 determines a location of the ROI 304 in the subsequent image 408 based on the location of the ROI 304 in the transformed baseline pattern 406. As shown in FIG. 4G, the example second graphical indication 410 identifies the location of the ROI 304 based on the alignment of the transformed baseline pattern 406. In some examples, the alignment of the baseline pattern 406 to the identified location(s) of the reference features 412, 414 in the subsequent image 408 and the resulting identification of the location of the ROI 304 is accomplished automatically (e.g., without human input). That is, there is no need for a human operator to refer to the CAD layout to identify the precise location of the ROI in the subsequent image 408. In some examples, the example reference feature locator circuitry 314 identifies locations of the first and second reference features 412, 414 in the subsequent image 408 automatically (e.g., without human input) based on an image analysis of the subsequent image 408.

In some examples, the subsequent image 408 is a first subsequent image in a plurality of subsequent images of the surface 312 of the semiconductor die 306 captured by different imaging tools. In such examples, the pattern manager circuitry 316 transforms the baseline pattern 406 for each of the plurality of subsequent images (e.g., for each imaging tool) to automatically determine a location of the ROI 304 in the images for subsequent examination/inspection without having to intermittently reference the CAD layout 402. Put differently, the example pattern manager circuitry 316 reuses the baseline pattern 406 for subsequent images captured with subsequent tooling.

In the examples of FIGS. 4A-4F, the die assessment circuitry 302 utilizes the input image 400 to generate the baseline pattern 406, determine the location of the ROI 304 in the subsequent image 408, etc. In some examples, the die assessment circuitry 302 utilizes the subsequent image 408 to generate the baseline pattern 406, determine the location of the ROI 304 in the input image 400, etc. For example, the location of the ROI 304 in the subsequent image 408 is clear/evident such that the die assessment circuitry 302 can readily generate the baseline pattern 406 for use in identifying the locations of the ROI 304 in other images (e.g., the input image 400). In some examples, the location of the ROI 304 in the subsequent image 408 is camouflaged and/or otherwise difficult to find. In such examples, the die assessment circuitry 302 can facilitate identification of the ROI 304 in the subsequent image 408 by comparing the subsequent image 408 to the CAD layout 402 (e.g., via user feedback), generating the baseline pattern 406 based on the feedback, etc. Further, the example die assessment circuitry 302 can utilize the baseline pattern 406 generated by the analysis of the subsequent image 408 for use in identifying the locations of the ROI 304 in other images (e.g., the input image 400).

While an example manner of implementing the die assessment circuitry 302 of FIG. 3 is illustrated in FIG. 3, one or more of the elements, processes, and/or devices illustrated in FIG. 3 may be combined, divided, re-arranged, omitted, eliminated, and/or implemented in any other way. Further, the example reference feature locator circuitry 314, the example pattern manager circuitry 316, the example ROI evaluator circuitry 318, and/or, more generally, the example die assessment circuitry 302 of FIG. 3, may be implemented by hardware alone or by hardware in combination with software and/or firmware. Thus, for example, any of the example reference feature locator circuitry 314, the example pattern manager circuitry 316, the example ROI evaluator circuitry 318, and/or, more generally, the example die assessment circuitry 302, could be implemented by programmable circuitry in combination with machine readable instructions (e.g., firmware or software), processor circuitry, analog circuit(s), digital circuit(s), logic circuit(s), programmable processor(s), programmable microcontroller(s), graphics processing unit(s) (GPU(s)), digital signal processor(s) (DSP(s)), ASIC(s), programmable logic device(s) (PLD(s)), and/or field programmable logic device(s) (FPLD(s)) such as FPGAs. Further still, the example die assessment circuitry 302 of FIG. 3 may include one or more elements, processes, and/or devices in addition to, or instead of, those illustrated in FIG. 3, and/or may include more than one of any or all of the illustrated elements, processes and devices.

A flowchart representative of example machine readable instructions, which may be executed by programmable circuitry to implement and/or instantiate the die assessment circuitry 302 of FIG. 3 and/or representative of example operations which may be performed by programmable circuitry to implement and/or instantiate the die assessment circuitry 302 of FIG. 3, are shown in FIG. 5. The machine readable instructions may be one or more executable programs or portion(s) of one or more executable programs for execution by programmable circuitry such as the programmable circuitry 612 shown in the example programmable circuitry platform 600 discussed below in connection with FIG. 6 and/or may be one or more function(s) or portion(s) of functions to be performed by the example programmable circuitry (e.g., an FPGA) discussed below in connection with FIGS. 7 and/or 8. In some examples, the machine readable instructions cause an operation, a task, etc., to be carried out and/or performed in an automated manner in the real world. As used herein, "automated" means without human involvement.

The program may be embodied in instructions (e.g., software and/or firmware) stored on one or more non-transitory computer readable and/or machine readable storage medium such as cache memory, a magnetic-storage device or disk (e.g., a floppy disk, a Hard Disk Drive (HDD), etc.), an optical-storage device or disk (e.g., a Blu-ray disk, a Compact Disk (CD), a Digital Versatile Disk (DVD), etc.), a Redundant Array of Independent Disks (RAID), a register, ROM, a solid-state drive (SSD), SSD memory, non-volatile memory (e.g., electrically erasable programmable read-only memory (EEPROM), flash memory, etc.), volatile memory (e.g., Random Access Memory (RAM) of any type, etc.), and/or any other storage device or storage disk. The instructions of the non-transitory computer readable and/or machine readable medium may program and/or be executed by programmable circuitry located in one or more hardware devices, but the entire program and/or parts thereof could alternatively be executed and/or instantiated by one or more hardware devices other than the programmable circuitry and/or embodied in dedicated hardware. The machine readable instructions may be distributed across multiple hardware devices and/or executed by two or more hardware devices (e.g., a server and a client hardware device). For example, the client hardware device may be implemented by an endpoint client hardware device (e.g., a hardware device associated with a human and/or machine user) or an intermediate client hardware device gateway (e.g., a radio access network (RAN)) that may facilitate communication between a server and an endpoint client hardware device. Similarly, the non-transitory computer readable storage medium may include one or more mediums. Further, although the example program is described with reference to the flowchart illustrated in FIG. 5, many other methods of implementing the example die assessment circuitry 302 may alternatively be used. For example, the order of execution of the blocks of the flowchart may be changed, and/or some of the blocks described may be changed, eliminated, or combined. Additionally or alternatively, any or all of the blocks of the flow chart may be implemented by one or more hardware circuits (e.g., processor circuitry, discrete and/or integrated analog and/or digital circuitry, an FPGA, an ASIC, a comparator, an operational-amplifier (op-amp), a logic circuit, etc.) structured to perform the corresponding operation without executing software or firmware. The programmable circuitry may be distributed in different network locations and/or local to one or more hardware devices (e.g., a single-core processor (e.g., a single core CPU), a multi-core processor (e.g., a multi-core CPU, an XPU, etc.)). For example, the programmable circuitry may be a CPU and/or an FPGA located in the same package (e.g., the same integrated circuit (IC) package or in two or more separate housings), one or more processors in a single machine, multiple processors distributed across multiple servers of a server rack, multiple processors distributed across one or more server racks, etc., and/or any combination(s) thereof.

The machine readable instructions described herein may be stored in one or more of a compressed format, an encrypted format, a fragmented format, a compiled format, an executable format, a packaged format, etc. Machine readable instructions as described herein may be stored as data (e.g., computer-readable data, machine-readable data, one or more bits (e.g., one or more computer-readable bits, one or more machine-readable bits, etc.), a bitstream (e.g., a computer-readable bitstream, a machine-readable bitstream, etc.), etc.) or a data structure (e.g., as portion(s) of instructions, code, representations of code, etc.) that may be utilized to create, manufacture, and/or produce machine executable instructions. For example, the machine readable instructions may be fragmented and stored on one or more storage devices, disks and/or computing devices (e.g., servers) located at the same or different locations of a network or collection of networks (e.g., in the cloud, in edge devices, etc.). The machine readable instructions may require one or more of installation, modification, adaptation, updating, combining, supplementing, configuring, decryption, decompression, unpacking, distribution, reassignment, compilation, etc., in order to make them directly readable, interpretable, and/or executable by a computing device and/or other machine. For example, the machine readable instructions may be stored in multiple parts, which are individually compressed, encrypted, and/or stored on separate computing devices, wherein the parts when decrypted, decompressed, and/or combined form a set of computer-executable and/or machine executable instructions that implement one or more functions and/or operations that may together form a program such as that described herein.

In another example, the machine readable instructions may be stored in a state in which they may be read by programmable circuitry, but require addition of a library (e.g., a dynamic link library (DLL)), a software development kit (SDK), an application programming interface (API), etc., in order to execute the machine-readable instructions on a particular computing device or other device. In another example, the machine readable instructions may need to be configured (e.g., settings stored, data input, network addresses recorded, etc.) before the machine readable instructions and/or the corresponding program(s) can be executed in whole or in part. Thus, machine readable, computer readable and/or machine readable media, as used herein, may include instructions and/or program(s) regardless of the particular format or state of the machine readable instructions and/or program(s).

The machine readable instructions described herein can be represented by any past, present, or future instruction language, scripting language, programming language, etc. For example, the machine readable instructions may be represented using any of the following languages: C, C++, Java, C#, Perl, Python, JavaScript, HyperText Markup Language (HTML), Structured Query Language (SQL), Swift, etc.

As mentioned above, the example operations of FIG. 5 may be implemented using executable instructions (e.g., computer readable and/or machine readable instructions) stored on one or more non-transitory computer readable and/or machine readable media. As used herein, the terms non-transitory computer readable medium, non-transitory computer readable storage medium, non-transitory machine readable medium, and/or non-transitory machine readable storage medium are expressly defined to include any type of computer readable storage device and/or storage disk and to exclude propagating signals and to exclude transmission media. Examples of such non-transitory computer readable medium, non-transitory computer readable storage medium, non-transitory machine readable medium, and/or non-transitory machine readable storage medium include optical storage devices, magnetic storage devices, an HDD, a flash memory, a read-only memory (ROM), a CD, a DVD, a cache, a RAM of any type, a register, and/or any other storage device or storage disk in which information is stored for any duration (e.g., for extended time periods, permanently, for brief instances, for temporarily buffering, and/or for caching of the information). As used herein, the terms "non-transitory computer readable storage device" and "non-transitory machine readable storage device" are defined to include any physical (mechanical, magnetic and/or electrical) hardware to retain information for a time period, but to exclude propagating signals and to exclude transmission media. Examples of non-transitory computer readable storage devices and/ or non-transitory machine readable storage devices include random access memory of any type, read only memory of any type, solid state memory, flash memory, optical discs, magnetic disks, disk drives, and/or redundant array of independent disks (RAID) systems. As used herein, the term "device" refers to physical structure such as mechanical and/or electrical equipment, hardware, and/or circuitry that may or may not be configured by computer readable instructions, machine readable instructions, etc., and/or manufactured to execute computer-readable instructions, machine-readable instructions, etc.

FIG. 5 is a flowchart representative of example machine readable instructions and/or example operations 300 that may be executed, instantiated, and/or performed by programmable circuitry to assess a ROI of an example semiconductor die. The example machine-readable instructions and/or the example operations 500 of FIG. 5 begin at block 502, at which the example reference feature locator circuitry 314 obtains a first image of a semiconductor die captured using a first imaging tool. For example, the reference feature locator circuitry 314 obtains the input image 400 (FIG. 4A) of the semiconductor die 306 captured using the first tool 308.

At block 504, the example reference feature locator circuitry 314 identifies locations of reference features on the semiconductor die in the first image. For example, the reference feature locator circuitry 314 identifies a first location of the first reference feature 412 and a second location of the second reference feature 414 on the semiconductor die 306 in the input image 400. In some examples, the reference features are identified based on user feedback from a human operator visually inspecting the first image.

At block 506, the example reference feature locator circuitry 314 accesses a design layout of the semiconductor die. For example, the reference feature locator circuitry 314 accesses the CAD layout 402 (FIG. 4B) of the semiconductor die 306 (e.g., from a reference database).

At block 508, the example reference feature locator circuitry 314 presents the design layout to a user to facilitate identification of a ROI on the semiconductor die. For example, the reference feature locator circuitry 314 presents and/or otherwise displays the CAD layout 402 to a user to facilitate identification of the ROI 304 on the semiconductor die 306. Further, the example reference feature locator circuitry 314 can access feedback (e.g., feedback that indicates ROI 304 identification) from a user.

At block 510, the example ROI evaluator circuitry 318 identifies a location of the ROI 304 in the input image based on feedback from the user. For example, the ROI evaluator circuitry 318 determines and/or identifies the location of the ROI 304 in the input image based on the user feedback. As such, the example ROI evaluator circuitry 318 determines the location of the ROI 304 in the input image 400 with input from a user referencing the CAD layout 402 of the semiconductor die 306.

At block 512, the example pattern manager circuitry 316 generates a baseline pattern of the semiconductor die based on relative locations of the reference features and the ROI in the first image. For example, the pattern manager circuitry 316 generates the baseline pattern 406 (FIG. 4D) of the semiconductor die 306 based on the relative locations of the first and second reference features 412, 414 and the ROI 304 in the input image 400 (FIGS. 4A and 4C). In some examples, the baseline pattern 406 defines a first spatial relationship between the first and second reference features 412, 414. Further, the example baseline pattern 406 defines a second spatial relationship between the ROI 304 and the first and second reference features 412, 414.

At block 514, the example ROI evaluator circuitry 318 analyzes (e.g., assesses, scans, etc.) the ROI 304 in the input image 400 for faults.

At block 516, the example reference feature locator circuitry 314 obtains a different image of the semiconductor die captured using a different imaging tool. For example, the reference feature locator circuitry 314 obtains the subsequent image 408 (FIG. 4E) of the semiconductor die 306 captured using the second tool 310.

At block 518, the example reference feature locator circuitry 314 identifies locations of the reference features on the semiconductor die in the different image. For example, the reference feature locator circuitry 314 identifies locations of the first and second reference features 412, 414 on the semiconductor die 306 in the subsequent image 408. In some examples, the locations of the reference features are identified based on user feedback. In other examples, the locations of the reference features are identified automatically using suitable image analysis techniques and the baseline pattern.

At block 520, the example pattern manager circuitry 316 transforms the baseline pattern to align the locations of the reference features in the baseline pattern with the locations of the reference features in the different image. For example, the pattern manager circuitry 316 transforms the baseline pattern 406 to align the locations of the first and second reference features 412, 414 in the baseline pattern 406 with the location of the first and second reference features 412, 414 in the subsequent image 408. In some examples, the pattern manager circuitry 316 transforms the baseline pattern 406 using one or more affine transformations. In some examples, the pattern manager circuitry 316 transforms the baseline pattern 406 by rotating, sliding, reflecting, and/or dilating the baseline pattern 406 relative to the subsequent image 408.

At block 522, the example ROI evaluator circuitry 318 determines a location of the ROI in the different image based on the location of the ROI in the transformed baseline pattern. For example, the ROI evaluator circuitry 318 determines a location of the ROI 304 in the subsequent image 408 based on the location of the ROI 304 in the transformed baseline pattern 406.

At block 524, the example ROI evaluator circuitry 318 analyzes the ROI in the different image for faults. For example, the ROI evaluator circuitry 318 analyzes the ROI 304 in the subsequent image 408 for faults.

At block 526, the example reference feature locator circuitry 314 determines whether to analyze another image from a different imaging tool. If the example reference feature locator circuitry 314 determines that another image is to be analyzed (e.g., from an example third semiconductor die imaging tool), then control of the process returns to block 516. Alternatively, if the example reference feature locator circuitry 314 determines that there is no other image to be analyzed, then the process ends.

FIG. 6 is a block diagram of an example programmable circuitry platform 600 structured to execute and/or instantiate the example machine-readable instructions and/or the example operations of FIG. 5 to implement the die assessment circuitry 302 of FIG. 3. The programmable circuitry platform 600 can be, for example, a server, a personal computer, a workstation, a self-learning machine (e.g., a neural network), a mobile device (e.g., a cell phone, a smart phone, a tablet such as an iPad^{™}), a personal digital assistant (PDA), an Internet appliance, a DVD player, a CD player, a digital video recorder, a Blu-ray player, a gaming console, a personal video recorder, a set top box, a headset (e.g., an augmented reality (AR) headset, a virtual reality (VR) headset, etc.) or other wearable device, or any other type of computing and/or electronic device.

The programmable circuitry platform 600 of the illustrated example includes programmable circuitry 612. The programmable circuitry 612 of the illustrated example is hardware. For example, the programmable circuitry 612 can be implemented by one or more integrated circuits, logic circuits, FPGAs, microprocessors, CPUs, GPUs, DSPs, and/or microcontrollers from any desired family or manufacturer. The programmable circuitry 612 may be implemented by one or more semiconductor based (e.g., silicon based) devices. In this example, the programmable circuitry 612 implements the example reference feature locator circuitry 314, the example pattern manager circuitry 316, and the example ROI evaluator circuitry 318.

The programmable circuitry 612 of the illustrated example includes a local memory 613 (e.g., a cache, registers, etc.). The programmable circuitry 612 of the illustrated example is in communication with main memory 614, 616, which includes a volatile memory 614 and a non-volatile memory 616, by a bus 618. The volatile memory 614 may be implemented by Synchronous Dynamic Random Access Memory (SDRAM), Dynamic Random Access Memory (DRAM), RAMBUS^{®} Dynamic Random Access Memory (RDRAM^{®}), and/or any other type of RAM device. The non-volatile memory 616 may be implemented by flash memory and/or any other desired type of memory device. Access to the main memory 614, 616 of the illustrated example is controlled by a memory controller 617. In some examples, the memory controller 617 may be implemented by one or more integrated circuits, logic circuits, microcontrollers from any desired family or manufacturer, or any other type of circuitry to manage the flow of data going to and from the main memory 614, 616.

The programmable circuitry platform 600 of the illustrated example also includes interface circuitry 620. The interface circuitry 620 may be implemented by hardware in accordance with any type of interface standard, such as an Ethernet interface, a universal serial bus (USB) interface, a Bluetooth^{®} interface, a near field communication (NFC) interface, a Peripheral Component Interconnect (PCI) interface, and/or a Peripheral Component Interconnect Express (PCIe) interface.

In the illustrated example, one or more input devices 622 are connected to the interface circuitry 620. The input device(s) 622 permit(s) a user (e.g., a human user, a machine user, etc.) to enter data and/or commands into the programmable circuitry 612. The input device(s) 622 can be implemented by, for example, an audio sensor, a microphone, a camera (still or video), a keyboard, a button, a mouse, a touchscreen, a trackpad, a trackball, an isopoint device, and/or a voice recognition system.

One or more output devices 624 are also connected to the interface circuitry 620 of the illustrated example. The output device(s) 624 can be implemented, for example, by display devices (e.g., a light emitting diode (LED), an organic light emitting diode (OLED), a liquid crystal display (LCD), a cathode ray tube (CRT) display, an in-place switching (IPS) display, a touchscreen, etc.), a tactile output device, a printer, and/or speaker. The interface circuitry 620 of the illustrated example, thus, typically includes a graphics driver card, a graphics driver chip, and/or graphics processor circuitry such as a GPU.

The interface circuitry 620 of the illustrated example also includes a communication device such as a transmitter, a receiver, a transceiver, a modem, a residential gateway, a wireless access point, and/or a network interface to facilitate exchange of data with external machines (e.g., computing devices of any kind) by a network 626. The communication can be by, for example, an Ethernet connection, a digital subscriber line (DSL) connection, a telephone line connection, a coaxial cable system, a satellite system, a beyond-line-of-sight wireless system, a line-of-sight wireless system, a cellular telephone system, an optical connection, etc.

The programmable circuitry platform 600 of the illustrated example also includes one or more mass storage discs or devices 628 to store firmware, software, and/or data. Examples of such mass storage discs or devices 628 include magnetic storage devices (e.g., floppy disk, drives, HDDs, etc.), optical storage devices (e.g., Blu-ray disks, CDs, DVDs, etc.), RAID systems, and/or solid-state storage discs or devices such as flash memory devices and/or SSDs.

The machine readable instructions 632, which may be implemented by the machine readable instructions of FIG. 5, may be stored in the mass storage device 628, in the volatile memory 614, in the non-volatile memory 616, and/or on at least one non-transitory computer readable storage medium such as a CD or DVD which may be removable.

FIG. 7 is a block diagram of an example implementation of the programmable circuitry 612 of FIG. 6. In this example, the programmable circuitry 612 of FIG. 6 is implemented by a microprocessor 700. For example, the microprocessor 700 may be a general-purpose microprocessor (e.g., general-purpose microprocessor circuitry). The microprocessor 700 executes some or all of the machine-readable instructions of the flowchart of FIG. 5 to effectively instantiate the circuitry of FIG. 3 as logic circuits to perform operations corresponding to those machine readable instructions. In some such examples, the circuitry of FIG. 3 is instantiated by the hardware circuits of the microprocessor 700 in combination with the machine-readable instructions. For example, the microprocessor 700 may be implemented by multi-core hardware circuitry such as a CPU, a DSP, a GPU, an XPU, etc. Although it may include any number of example cores 702 (e.g., 1 core), the microprocessor 700 of this example is a multi-core semiconductor device including N cores. The cores 702 of the microprocessor 700 may operate independently or may cooperate to execute machine readable instructions. For example, machine code corresponding to a firmware program, an embedded software program, or a software program may be executed by one of the cores 702 or may be executed by multiple ones of the cores 702 at the same or different times. In some examples, the machine code corresponding to the firmware program, the embedded software program, or the software program is split into threads and executed in parallel by two or more of the cores 702. The software program may correspond to a portion or all of the machine readable instructions and/or operations represented by the flowchart of FIG. 5.

The cores 702 may communicate by a first example bus 704. In some examples, the first bus 704 may be implemented by a communication bus to effectuate communication associated with one(s) of the cores 702. For example, the first bus 704 may be implemented by at least one of an Inter-Integrated Circuit (12C) bus, a Serial Peripheral Interface (SPI) bus, a PCI bus, or a PCIe bus. Additionally or alternatively, the first bus 704 may be implemented by any other type of computing or electrical bus. The cores 702 may obtain data, instructions, and/or signals from one or more external devices by example interface circuitry 706. The cores 702 may output data, instructions, and/or signals to the one or more external devices by the interface circuitry 706. Although the cores 702 of this example include example local memory 720 (e.g., Level 1 (L1) cache that may be split into an L1 data cache and an L1 instruction cache), the microprocessor 700 also includes example shared memory 710 that may be shared by the cores (e.g., Level 2 (L2 cache)) for high-speed access to data and/or instructions. Data and/or instructions may be transferred (e.g., shared) by writing to and/or reading from the shared memory 710. The local memory 720 of each of the cores 702 and the shared memory 710 may be part of a hierarchy of storage devices including multiple levels of cache memory and the main memory (e.g., the main memory 614, 616 of FIG. 6). Typically, higher levels of memory in the hierarchy exhibit lower access time and have smaller storage capacity than lower levels of memory. Changes in the various levels of the cache hierarchy are managed (e.g., coordinated) by a cache coherency policy.

Each core 702 may be referred to as a CPU, DSP, GPU, etc., or any other type of hardware circuitry. Each core 702 includes control unit circuitry 714, arithmetic and logic (AL) circuitry (sometimes referred to as an ALU) 716, a plurality of registers 718, the local memory 720, and a second example bus 722. Other structures may be present. For example, each core 702 may include vector unit circuitry, single instruction multiple data (SIMD) unit circuitry, load/store unit (LSU) circuitry, branch/jump unit circuitry, floating-point unit (FPU) circuitry, etc. The control unit circuitry 714 includes semiconductor-based circuits structured to control (e.g., coordinate) data movement within the corresponding core 702. The AL circuitry 716 includes semiconductor-based circuits structured to perform one or more mathematic and/or logic operations on the data within the corresponding core 702. The AL circuitry 716 of some examples performs integer based operations. In other examples, the AL circuitry 716 also performs floating-point operations. In yet other examples, the AL circuitry 716 may include first AL circuitry that performs integer-based operations and second AL circuitry that performs floating-point operations. In some examples, the AL circuitry 716 may be referred to as an Arithmetic Logic Unit (ALU).

The registers 718 are semiconductor-based structures to store data and/or instructions such as results of one or more of the operations performed by the AL circuitry 716 of the corresponding core 702. For example, the registers 718 may include vector register(s), SIMD register(s), general-purpose register(s), flag register(s), segment register(s), machine-specific register(s), instruction pointer register(s), control register(s), debug register(s), memory management register(s), machine check register(s), etc. The registers 718 may be arranged in a bank as shown in FIG. 7. Alternatively, the registers 718 may be organized in any other arrangement, format, or structure, such as by being distributed throughout the core 702 to shorten access time. The second bus 722 may be implemented by at least one of an I2C bus, a SPI bus, a PCI bus, or a PCIe bus.

Each core 702 and/or, more generally, the microprocessor 700 may include additional and/or alternate structures to those shown and described above. For example, one or more clock circuits, one or more power supplies, one or more power gates, one or more cache home agents (CHAs), one or more converged/common mesh stops (CMSs), one or more shifters (e.g., barrel shifter(s)) and/or other circuitry may be present. The microprocessor 700 is a semiconductor device fabricated to include many transistors interconnected to implement the structures described above in one or more integrated circuits (ICs) contained in one or more packages.

The microprocessor 700 may include and/or cooperate with one or more accelerators (e.g., acceleration circuitry, hardware accelerators, etc.). In some examples, accelerators are implemented by logic circuitry to perform certain tasks more quickly and/or efficiently than can be done by a general-purpose processor. Examples of accelerators include ASICs and FPGAs such as those discussed herein. A GPU, DSP and/or other programmable device can also be an accelerator. Accelerators may be on-board the microprocessor 700, in the same chip package as the microprocessor 700 and/or in one or more separate packages from the microprocessor 700.

FIG. 8 is a block diagram of another example implementation of the programmable circuitry 612 of FIG. 6. In this example, the programmable circuitry 612 is implemented by FPGA circuitry 800. For example, the FPGA circuitry 800 may be implemented by an FPGA. The FPGA circuitry 800 can be used, for example, to perform operations that could otherwise be performed by the example microprocessor 700 of FIG. 7 executing corresponding machine readable instructions. However, once configured, the FPGA circuitry 800 instantiates the operations and/or functions corresponding to the machine readable instructions in hardware and, thus, can often execute the operations/functions faster than they could be performed by a general-purpose microprocessor executing the corresponding software.

More specifically, in contrast to the microprocessor 700 of FIG. 7 described above (which is a general purpose device that may be programmed to execute some or all of the machine readable instructions represented by the flowchart of FIG. 5 but whose interconnections and logic circuitry are fixed once fabricated), the FPGA circuitry 800 of the example of FIG. 8 includes interconnections and logic circuitry that may be configured, structured, programmed, and/or interconnected in different ways after fabrication to instantiate, for example, some or all of the operations/functions corresponding to the machine readable instructions represented by the flowchart of FIG. 5. In particular, the FPGA circuitry 800 may be thought of as an array of logic gates, interconnections, and switches. The switches can be programmed to change how the logic gates are interconnected by the interconnections, effectively forming one or more dedicated logic circuits (unless and until the FPGA circuitry 800 is reprogrammed). The configured logic circuits enable the logic gates to cooperate in different ways to perform different operations on data received by input circuitry. Those operations may correspond to some or all of the instructions (e.g., the software and/or firmware) represented by the flowchart of FIG. 5. As such, the FPGA circuitry 800 may be configured and/or structured to effectively instantiate some or all of the operations/functions corresponding to the machine readable instructions of the flowchart of FIG. 5 as dedicated logic circuits to perform the operations/functions corresponding to those software instructions in a dedicated manner analogous to an ASIC. Therefore, the FPGA circuitry 800 may perform the operations/functions corresponding to the some or all of the machine readable instructions of FIG. 5 faster than the general-purpose microprocessor can execute the same.

In the example of FIG. 8, the FPGA circuitry 800 is configured and/or structured in response to being programmed (and/or reprogrammed one or more times) based on a binary file. In some examples, the binary file may be compiled and/or generated based on instructions in a hardware description language (HDL) such as Lucid, Very High Speed Integrated Circuits

(VHSIC) Hardware Description Language (VHDL), or Verilog. For example, a user (e.g., a human user, a machine user, etc.) may write code or a program corresponding to one or more operations/functions in an HDL; the code/program may be translated into a low-level language as needed; and the code/program (e.g., the code/program in the low-level language) may be converted (e.g., by a compiler, a software application, etc.) into the binary file. In some examples, the FPGA circuitry 800 of FIG. 8 may access and/or load the binary file to cause the FPGA circuitry 800 of FIG. 8 to be configured and/or structured to perform the one or more operations/functions. For example, the binary file may be implemented by a bit stream (e.g., one or more computer-readable bits, one or more machine-readable bits, etc.), data (e.g., computer-readable data, machine-readable data, etc.), and/or machine-readable instructions accessible to the FPGA circuitry 800 of FIG. 8 to cause configuration and/or structuring of the FPGA circuitry 800 of FIG. 8, or portion(s) thereof.

In some examples, the binary file is compiled, generated, transformed, and/or otherwise output from a uniform software platform utilized to program FPGAs. For example, the uniform software platform may translate first instructions (e.g., code or a program) that correspond to one or more operations/functions in a high-level language (e.g., C, C++, Python, etc.) into second instructions that correspond to the one or more operations/functions in an HDL. In some such examples, the binary file is compiled, generated, and/or otherwise output from the uniform software platform based on the second instructions. In some examples, the FPGA circuitry 800 of FIG. 8 may access and/or load the binary file to cause the FPGA circuitry 800 of FIG. 8 to be configured and/or structured to perform the one or more operations/functions. For example, the binary file may be implemented by a bit stream (e.g., one or more computer-readable bits, one or more machine-readable bits, etc.), data (e.g., computer-readable data, machine-readable data, etc.), and/or machine-readable instructions accessible to the FPGA circuitry 800 of FIG. 8 to cause configuration and/or structuring of the FPGA circuitry 800 of FIG. 8, or portion(s) thereof.

The FPGA circuitry 800 of FIG. 8, includes example input/output (I/O) circuitry 802 to obtain and/or output data to/from example configuration circuitry 804 and/or external hardware 806. For example, the configuration circuitry 804 may be implemented by interface circuitry that may obtain a binary file, which may be implemented by a bit stream, data, and/or machine-readable instructions, to configure the FPGA circuitry 800, or portion(s) thereof. In some such examples, the configuration circuitry 804 may obtain the binary file from a user, a machine (e.g., hardware circuitry (e.g., programmable or dedicated circuitry) that may implement an Artificial Intelligence/Machine Learning (AI/ML) model to generate the binary file), etc., and/or any combination(s) thereof). In some examples, the external hardware 806 may be implemented by external hardware circuitry. For example, the external hardware 806 may be implemented by the microprocessor 700 of FIG. 7.

The FPGA circuitry 800 also includes an array of example logic gate circuitry 808, a plurality of example configurable interconnections 810, and example storage circuitry 812. The logic gate circuitry 808 and the configurable interconnections 810 are configurable to instantiate one or more operations/functions that may correspond to at least some of the machine readable instructions of FIG. 5 and/or other desired operations. The logic gate circuitry 808 shown in FIG. 8 is fabricated in blocks or groups. Each block includes semiconductor-based electrical structures that may be configured into logic circuits. In some examples, the electrical structures include logic gates (e.g., And gates, Or gates, Nor gates, etc.) that provide basic building blocks for logic circuits. Electrically controllable switches (e.g., transistors) are present within each of the logic gate circuitry 808 to enable configuration of the electrical structures and/or the logic gates to form circuits to perform desired operations/functions. The logic gate circuitry 808 may include other electrical structures such as look-up tables (LUTs), registers (e.g., flip-flops or latches), multiplexers, etc.

The configurable interconnections 810 of the illustrated example are conductive pathways, traces, vias, or the like that may include electrically controllable switches (e.g., transistors) whose state can be changed by programming (e.g., using an HDL instruction language) to activate or deactivate one or more connections between one or more of the logic gate circuitry 808 to program desired logic circuits.

The storage circuitry 812 of the illustrated example is structured to store result(s) of the one or more of the operations performed by corresponding logic gates. The storage circuitry 812 may be implemented by registers or the like. In the illustrated example, the storage circuitry 812 is distributed amongst the logic gate circuitry 808 to facilitate access and increase execution speed.

The example FPGA circuitry 800 of FIG. 8 also includes example dedicated operations circuitry 814. In this example, the dedicated operations circuitry 814 includes special purpose circuitry 816 that may be invoked to implement commonly used functions to avoid the need to program those functions in the field. Examples of such special purpose circuitry 816 include memory (e.g., DRAM) controller circuitry, PCIe controller circuitry, clock circuitry, transceiver circuitry, memory, and multiplier-accumulator circuitry. Other types of special purpose circuitry may be present. In some examples, the FPGA circuitry 800 may also include example general purpose programmable circuitry 818 such as an example CPU 820 and/or an example DSP 822. Other general purpose programmable circuitry 818 may additionally or alternatively be present such as a GPU, an XPU, etc., that can be programmed to perform other operations.

Although FIGS. 7 and 8 illustrate two example implementations of the programmable circuitry 612 of FIG. 6, many other approaches are contemplated. For example, FPGA circuitry may include an on-board CPU, such as one or more of the example CPU 820 of FIG. 7. Therefore, the programmable circuitry 612 of FIG. 6 may additionally be implemented by combining at least the example microprocessor 700 of FIG. 7 and the example FPGA circuitry 800 of FIG. 8. In some such hybrid examples, one or more cores 702 of FIG. 7 may execute a first portion of the machine readable instructions represented by the flowchart of FIG. 5 to perform first operation(s)/function(s), the FPGA circuitry 800 of FIG. 8 may be configured and/or structured to perform second operation(s)/function(s) corresponding to a second portion of the machine readable instructions represented by the flowchart of FIG. 5, and/or an ASIC may be configured and/or structured to perform third operation(s)/function(s) corresponding to a third portion of the machine readable instructions represented by the flowchart of FIG. 5.

It should be understood that some or all of the circuitry of FIG. 3 may, thus, be instantiated at the same or different times. For example, same and/or different portion(s) of the microprocessor 700 of FIG. 7 may be programmed to execute portion(s) of machine-readable instructions at the same and/or different times. In some examples, same and/or different portion(s) of the FPGA circuitry 800 of FIG. 8 may be configured and/or structured to perform operations/functions corresponding to portion(s) of machine-readable instructions at the same and/or different times.

In some examples, some or all of the circuitry of FIG. 3 may be instantiated, for example, in one or more threads executing concurrently and/or in series. For example, the microprocessor 700 of FIG. 7 may execute machine readable instructions in one or more threads executing concurrently and/or in series. In some examples, the FPGA circuitry 800 of FIG. 8 may be configured and/or structured to carry out operations/functions concurrently and/or in series. Moreover, in some examples, some or all of the circuitry of FIG. 3 may be implemented within one or more virtual machines and/or containers executing on the microprocessor 700 of FIG. 7.

In some examples, the programmable circuitry 612 of FIG. 6 may be in one or more packages. For example, the microprocessor 700 of FIG. 7 and/or the FPGA circuitry 800 of FIG. 8 may be in one or more packages. In some examples, an XPU may be implemented by the programmable circuitry 612 of FIG. 6, which may be in one or more packages. For example, the XPU may include a CPU (e.g., the microprocessor 700 of FIG. 7, the CPU 820 of FIG. 8, etc.) in one package, a DSP (e.g., the DSP 822 of FIG. 8) in another package, a GPU in yet another package, and an FPGA (e.g., the FPGA circuitry 800 of FIG. 8) in still yet another package.

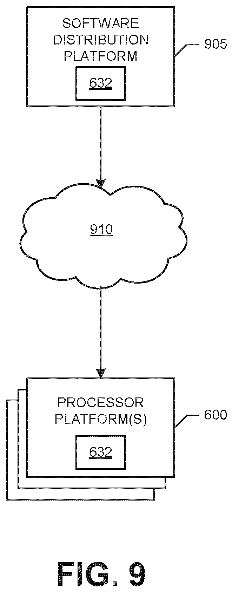

A block diagram illustrating an example software distribution platform 905 to distribute software such as the example machine readable instructions 632 of FIG. 6 to other hardware devices (e.g., hardware devices owned and/or operated by third parties from the owner and/or operator of the software distribution platform) is illustrated in FIG. 9. The example software distribution platform 905 may be implemented by any computer server, data facility, cloud service, etc., capable of storing and transmitting software to other computing devices. The third parties may be customers of the entity owning and/or operating the software distribution platform 905. For example, the entity that owns and/or operates the software distribution platform 905 may be a developer, a seller, and/or a licensor of software such as the example machine readable instructions 632 of FIG. 6. The third parties may be consumers, users, retailers, OEMs, etc., who purchase and/or license the software for use and/or re-sale and/or sub-licensing. In the illustrated example, the software distribution platform 905 includes one or more servers and one or more storage devices. The storage devices store the machine readable instructions 632, which may correspond to the example machine readable instructions of FIG. 5, as described above. The one or more servers of the example software distribution platform 905 are in communication with an example network 910, which may correspond to any one or more of the Internet and/or any of the example networks described above. In some examples, the one or more servers are responsive to requests to transmit the software to a requesting party as part of a commercial transaction. Payment for the delivery, sale, and/or license of the software may be handled by the one or more servers of the software distribution platform and/or by a third party payment entity. The servers enable purchasers and/or licensors to download the machine readable instructions 632 from the software distribution platform 905. For example, the software, which may correspond to the example machine readable instructions of FIG. 5, may be downloaded to the example programmable circuitry platform 600, which is to execute the machine readable instructions 632 to implement the die assessment circuitry 302. In some examples, one or more servers of the software distribution platform 905 periodically offer, transmit, and/or force updates to the software (e.g., the example machine readable instructions 632 of FIG. 6) to ensure improvements, patches, updates, etc., are distributed and applied to the software at the end user devices. Although referred to as software above, the distributed "software" could alternatively be firmware.

"Including" and "comprising" (and all forms and tenses thereof) are used herein to be open ended terms. Thus, whenever a claim employs any form of "include" or "comprise" (e.g., comprises, includes, comprising, including, having, etc.) as a preamble or within a claim recitation of any kind, it is to be understood that additional elements, terms, etc., may be present without falling outside the scope of the corresponding claim or recitation. As used herein, when the phrase "at least" is used as the transition term in, for example, a preamble of a claim, it is open-ended in the same manner as the term "comprising" and "including" are open ended. The term "and/or" when used, for example, in a form such as A, B, and/or C refers to any combination or subset of A, B, C such as (1) A alone, (2) B alone, (3) C alone, (4) A with B, (5) A with C, (6) B with C, or (7) A with B and with C. As used herein in the context of describing structures, components, items, objects and/or things, the phrase "at least one of A and B" is intended to refer to implementations including any of (1) at least one A, (2) at least one B, or (3) at least one A and at least one B. Similarly, as used herein in the context of describing structures, components, items, objects and/or things, the phrase "at least one of A or B" is intended to refer to implementations including any of (1) at least one A, (2) at least one B, or (3) at least one A and at least one B. As used herein in the context of describing the performance or execution of processes, instructions, actions, activities, etc., the phrase "at least one of A and B" is intended to refer to implementations including any of (1) at least one A, (2) at least one B, or (3) at least one A and at least one B. Similarly, as used herein in the context of describing the performance or execution of processes, instructions, actions, activities, etc., the phrase "at least one of A or B" is intended to refer to implementations including any of (1) at least one A, (2) at least one B, or (3) at least one A and at least one B.

As used herein, singular references (e.g., "a", "an", "first", "second", etc.) do not exclude a plurality. The term "a" or "an" object, as used herein, refers to one or more of that object. The terms "a" (or "an"), "one or more", and "at least one" are used interchangeably herein. Furthermore, although individually listed, a plurality of means, elements, or actions may be implemented by, e.g., the same entity or object. Additionally, although individual features may be included in different examples or claims, these may possibly be combined, and the inclusion in different examples or claims does not imply that a combination of features is not feasible and/or advantageous.

As used herein, unless otherwise stated, the term "above" describes the relationship of two parts relative to Earth. A first part is above a second part, if the second part has at least one part between Earth and the first part. Likewise, as used herein, a first part is "below" a second part when the first part is closer to the Earth than the second part. As noted above, a first part can be above or below a second part with one or more of: other parts therebetween, without other parts therebetween, with the first and second parts touching, or without the first and second parts being in direct contact with one another.

Notwithstanding the foregoing, in the case of referencing a semiconductor device (e.g., a transistor), a semiconductor die containing a semiconductor device, and/or an integrated circuit (IC) package containing a semiconductor die during fabrication or manufacturing, "above" is not with reference to Earth, but instead is with reference to an underlying substrate on which relevant components are fabricated, assembled, mounted, supported, or otherwise provided. Thus, as used herein and unless otherwise stated or implied from the context, a first component within a semiconductor die (e.g., a transistor or other semiconductor device) is "above" a second component within the semiconductor die when the first component is farther away from a substrate (e.g., a semiconductor wafer) during fabrication/manufacturing than the second component on which the two components are fabricated or otherwise provided. Similarly, unless otherwise stated or implied from the context, a first component within an IC package (e.g., a semiconductor die) is "above" a second component within the IC package during fabrication when the first component is farther away from a printed circuit board (PCB) to which the IC package is to be mounted or attached. It is to be understood that semiconductor devices are often used in orientation different than their orientation during fabrication. Thus, when referring to a semiconductor device (e.g., a transistor), a semiconductor die containing a semiconductor device, and/or an integrated circuit (IC) package containing a semiconductor die during use, the definition of "above" in the preceding paragraph (i.e., the term "above" describes the relationship of two parts relative to Earth) will likely govern based on the usage context.

As used in this patent, stating that any part (e.g., a layer, film, area, region, or plate) is in any way on (e.g., positioned on, located on, disposed on, or formed on, etc.) another part, indicates that the referenced part is either in contact with the other part, or that the referenced part is above the other part with one or more intermediate part(s) located therebetween.

As used herein, connection references (e.g., attached, coupled, connected, and joined) may include intermediate members between the elements referenced by the connection reference and/or relative movement between those elements unless otherwise indicated. As such, connection references do not necessarily infer that two elements are directly connected and/or in fixed relation to each other. As used herein, stating that any part is in "contact" with another part is defined to mean that there is no intermediate part between the two parts.

Unless specifically stated otherwise, descriptors such as "first," "second," "third," etc., are used herein without imputing or otherwise indicating any meaning of priority, physical order, arrangement in a list, and/or ordering in any way, but are merely used as labels and/or arbitrary names to distinguish elements for ease of understanding the disclosed examples. In some examples, the descriptor "first" may be used to refer to an element in the detailed description, while the same element may be referred to in a claim with a different descriptor such as "second" or "third." In such instances, it should be understood that such descriptors are used merely for identifying those elements distinctly within the context of the discussion (e.g., within a claim) in which the elements might, for example, otherwise share a same name.

As used herein, "approximately" and "about" modify their subjects/values to recognize the potential presence of variations that occur in real world applications. For example, "approximately" and "about" may modify dimensions that may not be exact due to manufacturing tolerances and/or other real world imperfections as will be understood by persons of ordinary skill in the art. For example, "approximately" and "about" may indicate such dimensions may be within a tolerance range of +/- 10% unless otherwise specified herein.

As used herein, the phrase "in communication," including variations thereof, encompasses direct communication and/or indirect communication through one or more intermediary components, and does not require direct physical (e.g., wired) communication and/or constant communication, but rather additionally includes selective communication at periodic intervals, scheduled intervals, aperiodic intervals, and/or one-time events.

As used herein, "programmable circuitry" is defined to include (i) one or more special purpose electrical circuits (e.g., an application specific circuit (ASIC)) structured to perform specific operation(s) and including one or more semiconductor-based logic devices (e.g., electrical hardware implemented by one or more transistors), and/or (ii) one or more general purpose semiconductor-based electrical circuits programmable with instructions to perform specific functions(s) and/or operation(s) and including one or more semiconductor-based logic devices (e.g., electrical hardware implemented by one or more transistors). Examples of programmable circuitry include programmable microprocessors such as Central Processor Units (CPUs) that may execute first instructions to perform one or more operations and/or functions, Field Programmable Gate Arrays (FPGAs) that may be programmed with second instructions to cause configuration and/or structuring of the FPGAs to instantiate one or more operations and/or functions corresponding to the first instructions, Graphics Processor Units (GPUs) that may execute first instructions to perform one or more operations and/or functions, Digital Signal Processors (DSPs) that may execute first instructions to perform one or more operations and/or functions, XPUs, Network Processing Units (NPUs) one or more microcontrollers that may execute first instructions to perform one or more operations and/or functions and/or integrated circuits such as Application Specific Integrated Circuits (ASICs). For example, an XPU may be implemented by a heterogeneous computing system including multiple types of programmable circuitry (e.g., one or more FPGAs, one or more CPUs, one or more GPUs, one or more NPUs, one or more DSPs, etc., and/or any combination(s) thereof), and orchestration technology (e.g., application programming interface(s) (API(s)) that may assign computing task(s) to whichever one(s) of the multiple types of programmable circuitry is/are suited and available to perform the computing task(s).

As used herein integrated circuit/circuitry is defined as one or more semiconductor packages containing one or more circuit elements such as transistors, capacitors, inductors, resistors, current paths, diodes, etc. For example, an integrated circuit may be implemented as one or more of an ASIC, an FPGA, a chip, a microchip, programmable circuitry, a semiconductor substrate coupling multiple circuit elements, a system on chip (SoC), etc.

From the foregoing, it will be appreciated that example systems, apparatus, articles of manufacture, and methods have been disclosed that determine an example pattern of fiducial markers for locating an ROI across images generated by various imaging tools. For example, disclosed examples determine an example pattern of fiducial markers based on a first image of a die surface generated by a first imaging tool to, in turn, compare the pattern to a second image of the die surface generated by a second imaging tool. Further, disclosed examples locate the ROI in the second image based on the pattern. Some disclosed examples locate the ROI in a third image of the die surface (e.g., generated by a third imaging tool different from the first and second imaging tools) by utilizing the example pattern. As such, disclosed examples quickly (e.g., automatically) locate ROIs in multiple images of a die surface without a user needing to manually refer to a database of design blueprints. Further, examples disclosed herein protect design files from unwanted exposure by reducing the number of times an operator accesses the database of design blueprints. Disclosed examples enable accurate and efficient location of ROIs across different images. As such, examples disclosed herein are compatible with different types of imaging tools. Further, disclosed examples enable responsive and accurate remedial actions to address and mitigate failures associated with the ROIs. Disclosed systems, apparatus, articles of manufacture, and methods improve the efficiency of using a computing device by reducing the processing time needed to identify/locate a ROI in an image of a semiconductor die. Disclosed systems, apparatus, articles of manufacture, and methods are accordingly directed to one or more improvement(s) in the operation of a machine such as a computer or other electronic and/or mechanical device.

Example 1 includes an apparatus comprising interface circuitry, machine-readable instructions, and at least one processor circuit to be programmed by the machine-readable instructions to identify a location of a reference feature on a semiconductor die within a first image of the semiconductor die, the first image containing a region of interest on the semiconductor die adjacent to the reference feature, transform a baseline pattern of the semiconductor die to align a location of a baseline feature in the baseline pattern with the location of the reference feature in the first image, and determine a location of the region of interest in the first image based on the transformed baseline pattern.

Example 2 includes the apparatus of example 1, wherein one or more of the at least one processor circuit is to automatically determine the location of the region of interest in the first image without input from a user referencing a computer aided design (CAD) layout of the semiconductor die.

Example 3 includes the apparatus of example 1 or example 2, wherein one or more of the at least one processor circuit is to transform the baseline pattern using an affine transformation.

Example 4 includes the apparatus of any of examples 1-3, wherein the reference feature is a fiducial marker.

Example 5 includes the apparatus of any of examples 1-4, wherein one or more of the at least one processor circuit is to identify a location of the reference feature within a second image of the semiconductor die, the second image containing the region of interest, determine a location of the region of interest in the second image based on the location of the reference feature in the second image, and generate the baseline pattern based on the location of the reference feature in the second image and based on the location of the region of interest in the second image.

Example 6 includes the apparatus of any of examples 1-5, wherein one or more of the at least one processor circuit is to define the location of the baseline feature in the baseline pattern with the location of the reference feature within the second image.

Example 7 includes the apparatus of any of examples 1-6, wherein the first image is captured using a first type of imaging device, and the second image is captured using a second type of imaging device, the second type of imaging device different than the first type of imaging device.

Example 8 includes the apparatus of any of examples 1-7, wherein the first and second types of imaging devices correspond to different ones of at least one of a scanning electron microscope (SEM), a transmission electron microscope (TEM), focused ion beam (FIB) device, a nanoprober, or an optical microscope.

Example 9 includes the apparatus of any of examples 1-8, wherein the reference feature is one of a set of different reference features captured in both the first and second images, and one or more of the at least one processor circuit is to generate the baseline pattern based on locations of each of the different reference features, the baseline pattern defining a spatial relationship between the different references features and defining a spatial relationship between the region of interest and the set of the different reference features.

Example 10 includes at least one non-transitory machine-readable storage medium comprising machine-readable instructions to cause at least one processor circuit to at least identify a location of a reference feature on a semiconductor die within a first image of the semiconductor die, the first image containing a region of interest on the semiconductor die adjacent to the reference feature, transform a baseline pattern of the semiconductor die to align a location of a baseline feature in the baseline pattern with the location of the reference feature in the first image, and determine a location of the region of interest in the first image based on the transformed baseline pattern.

Example 11 includes the at least one non-transitory machine-readable storage medium of example 10, wherein the machine-readable instructions are to cause one or more of the at least one processor circuit to automatically determine the location of the region of interest in the first image without input from a user referencing a computer aided design (CAD) layout of the semiconductor die.

Example 12 includes the at least one non-transitory machine-readable storage medium of example 10 or example 11, wherein the machine-readable instructions are to cause one or more of the at least one processor circuit to identify a location of the reference feature within a second image of the semiconductor die, the second image containing the region of interest, determine a location of the region of interest in the second image based on the location of the reference feature in the second image, and generate the baseline pattern based on the location of the reference feature in the second image and based on the location of the region of interest in the second image.

Example 13 includes the at least one non-transitory machine-readable storage medium of any of examples 10-12, wherein the machine-readable instructions are to cause one or more of the at least one processor circuit to define the location of the baseline feature in the baseline pattern with the location of the reference feature within a second image.

Example 14 includes the at least one non-transitory machine-readable storage medium of any of examples 10-13, wherein the first image is captured using a first type of imaging device, and the second image is captured using a second type of imaging device, the second type of imaging device different than the first type of imaging device.

Example 15 includes the at least one non-transitory machine-readable storage medium of any of examples 10-14, wherein the reference feature is one of a set of different reference features captured in both the first and second images, and the machine-readable instructions are to cause one or more of the at least one processor circuit to generate the baseline pattern based on locations of each of the different reference features, the baseline pattern defining a spatial relationship between the different references features and defining a spatial relationship between the region of interest and the set of the different reference features.

Example 16 includes a method comprising identifying, by at least one processor circuit programmed by at least one instruction, a location of a reference feature on a semiconductor die within a first image of the semiconductor die, the first image containing a region of interest on the semiconductor die adjacent to the reference feature, transforming, by one or more of the at least one processor circuit, a baseline pattern of the semiconductor die to align a location of a baseline feature in the baseline pattern with the location of the reference feature in the first image, and determining, by one or more of the at least one processor circuit, a location of the region of interest in the first image based on the transformed baseline pattern.

Example 17 includes the method of example 16, further including identifying a location of the reference feature within a second image of the semiconductor die, the second image containing the region of interest, determining a location of the region of interest in the second image based on the location of the reference feature in the second image, and generating the baseline pattern based on the location of the reference feature in the second image and based on the location of the region of interest in the second image.

Example 18 includes the method of example 16 or example 17, further including defining the location of the baseline feature in the baseline pattern with the location of the reference feature within a second image.

Example 19 includes the method of any of examples 16-18, wherein the first image is captured using a first type of imaging device, and the second image is captured using a second type of imaging device, the second type of imaging device different than the first type of imaging device.

Example 20 includes the method of any of examples 16-19, wherein the reference feature is one of a set of different reference features captured in both the first and second images, further including generating the baseline pattern based on locations of each of the different reference features, the baseline pattern defining a spatial relationship between the different references features and defining a spatial relationship between the region of interest and the set of the different reference features.

The following claims are hereby incorporated into this Detailed Description by this reference. Although certain example systems, apparatus, articles of manufacture, and methods have been disclosed herein, the scope of coverage of this patent is not limited thereto. On the contrary, this patent covers all systems, apparatus, articles of manufacture, and methods fairly falling within the scope of the claims of this patent.

## Claims

1. An apparatus comprising:
interface circuitry;
machine-readable instructions; and
at least one processor circuit to be programmed by the machine-readable instructions to:
identify a first location of a reference feature on a semiconductor die within a first image of the semiconductor die, the first image containing a region of interest on the semiconductor die adjacent to the reference feature;
transform a baseline pattern of the semiconductor die to align a second location of a baseline feature in the baseline pattern with the first location of the reference feature in the first image; and
determine a third location of the region of interest in the first image based on the transformed baseline pattern.

2. The apparatus of claim 1, wherein one or more of the at least one processor circuit is to automatically determine the third location of the region of interest in the first image without input from a user referencing a computer aided design (CAD) layout of the semiconductor die.

3. The apparatus of any of claims 1 or 2, wherein one or more of the at least one processor circuit is to transform the baseline pattern using an affine transformation.

4. The apparatus of any of claims 1, 2, or 3, wherein the reference feature is a fiducial marker.

5. The apparatus of any of claims 1, 2, 3, or 4, wherein one or more of the at least one processor circuit is to:
identify a fourth location of the reference feature within a second image of the semiconductor die, the second image containing the region of interest;
determine a fifth location of the region of interest in the second image based on the fourth location of the reference feature in the second image; and
generate the baseline pattern based on the fourth location of the reference feature in the second image and based on the fifth location of the region of interest in the second image.

6. The apparatus of claim 5, wherein one or more of the at least one processor circuit is to define the second location of the baseline feature in the baseline pattern with the fourth location of the reference feature within the second image.

7. The apparatus of any of claims 5 or 6, wherein the first image is captured using a first type of imaging device, and the second image is captured using a second type of imaging device, the second type of imaging device different than the first type of imaging device.

8. The apparatus of claim 7, wherein the first type of imaging device and the second type of imaging device correspond to different ones of at least one of a scanning electron microscope (SEM), a transmission electron microscope (TEM), focused ion beam (FIB) device, a nanoprober, or an optical microscope.

9. The apparatus of any of claims 5, 6, 7, or 8, wherein the reference feature is one of a set of different reference features captured in both the first and second images, and one or more of the at least one processor circuit is to generate the baseline pattern based on locations of each of the different reference features, the baseline pattern defining a first spatial relationship between the different references features and defining a second spatial relationship between the region of interest and the set of the different reference features.

10. A method comprising:
identifying, by at least one processor circuit programmed by at least one instruction, a first location of a reference feature on a semiconductor die within a first image of the semiconductor die, the first image containing a region of interest on the semiconductor die adjacent to the reference feature;
transforming, by one or more of the at least one processor circuit, a baseline pattern of the semiconductor die to align a second location of a baseline feature in the baseline pattern with the first location of the reference feature in the first image; and
determining, by one or more of the at least one processor circuit, a third location of the region of interest in the first image based on the transformed baseline pattern.

11. The method of claim 10, further including:
identifying a fourth location of the reference feature within a second image of the semiconductor die, the second image containing the region of interest;
determining a fifth location of the region of interest in the second image based on the fourth location of the reference feature in the second image; and
generating the baseline pattern based on the fourth location of the reference feature in the second image and based on the fifth location of the region of interest in the second image.

12. The method of claim 11, further including defining the second location of the baseline feature in the baseline pattern with the fourth location of the reference feature within the second image.

13. The method of any of claims 11 or 12, wherein the first image is captured using a first type of imaging device, and the second image is captured using a second type of imaging device, the second type of imaging device different than the first type of imaging device.

14. The method of any of claims 11, 12, or 13, wherein the reference feature is one of a set of different reference features captured in both the first and second images, further including generating the baseline pattern based on locations of each of the different reference features, the baseline pattern defining a first spatial relationship between the different references features and defining a second spatial relationship between the region of interest and the set of the different reference features.

15. A computer program comprising instructions which, when the program is executed by a computer, cause the computer to carry out the method or realize the apparatus as claimed in any preceding claim.
